Europäisches Patentamt

European Patent Office

Office européen des brevets

(19)

(11) **EP 1 364 551 B1**

## (12) FASCICULE DE BREVET EUROPEEN

(45) Date de publication et mention
de la délivrance du brevet:
**24.08.2005 Bulletin 2005/34**

(21) Numéro de dépôt: **02706918.6**

(22) Date de dépôt: **01.03.2002**

(51) Int Cl.⁷: **H04Q 11/00**

(86) Numéro de dépôt international:
**PCT/FR2002/000756**

(87) Numéro de publication internationale:
**WO 2002/071792 (12.09.2002 Gazette 2002/37)**

(54) **ROUTEURS OPTIQUES UTILISANT DES MODULES D'AMPLIFICATION DE POSITIONS ANGULAIRES**

OPTISCHE ROUTER MIT WINKELSTELLUNG-VERSTÄRKUNGSMODULEN

OPTICAL ROUTERS USING ANGULAR POSITION AMPLIFICATION MODULES

(84) Etats contractants désignés:
**AT BE CH CY DE DK ES FI FR GB GR IE IT LI LU MC NL PT SE TR**

(30) Priorité: **02.03.2001 FR 0102922**

(43) Date de publication de la demande:
**26.11.2003 Bulletin 2003/48**

(73) Titulaire: **Teem Photonics**
**38240 Meylan (FR)**

(72) Inventeur: **VALETTE, Serge**
**F-38100 GRENOBLE (FR)**

(74) Mandataire: **Quantin, Bruno Marie Henri et al**
**Santarelli**
**14 Avenue de la Grande Armée**
**B.P. 237**
**75822 Paris Cedex 17 (FR)**

(56) Documents cités:
**EP-A- 0 921 702    WO-A-01/07945**
**US-A- 5 495 356    US-A- 6 128 113**

• LI Y ET AL: "OPTICAL NONBLOCKING MULTICAST AND BROADCAST INTERCONNECTS USING MULTIDIMENSIONAL MULTIPLEXING CONCEPTS" JOURNAL OF LIGHTWAVE TECHNOLOGY, IEEE. NEW YORK, US, vol. 14, no. 2, 1 février 1996 (1996-02-01), pages 129-138, XP000585263 ISSN: 0733-8724
• LIN ET AL: "Micro-electro-mechanical systems (MEMS) for WDM optical-crossconnect networks" MILITARY COMMUNICATIONS CONFERENCE PROCEEDINGS, 1999. MILCOM 1999. IEEE ATLANTIC CITY, NJ, USA 31 OCT.-3 NOV. 1999, PISCATAWAY, NJ, USA,IEEE, US, 31 octobre 1999 (1999-10-31), pages 954-957, XP010369682 ISBN: 0-7803-5538-5
• NEILSON D T ET AL.: " Fully provisioned 112*112 micro-mechanical optical crossconnect with 35.8 Tb/s demonstrated capacity" TRENDS IN OPTICS AND PHOTONICS IEEE (POST DEAD LINE PAPERS), vol. 37, janvier 2000 (2000-01), page 202 - 204 vol.4 XP002184998 cité dans la demande

**Description**

## 1. DOMAINE TECHNIQUE

L'invention concerne le routage et le brassage d'informations optiques en provenance d'une pluralité de voies d'arrivée, en particulier transportées par les réseaux de télécommunication à fibres optiques.

L'invention peut s'appliquer à tous les domaines dans lesquels des signaux lumineux transportés ou non par fibres optiques doivent être réorientés et redistribués spatialement.

## 2. ETAT DE LA TECHNIQUE

L'utilisation de routeurs tout-optique est devenu un énorme enjeu dans les systèmes de télécommunications à fibres optiques du fait de l'accroissement du nombre de connexions à gérer, du nombre de longueurs d'ondes mises en jeu et de l'augmentation des fréquences de modulation des porteuses optiques qui atteignent aujourd'hui 40 Gbit/s.

Cette évolution rend en effet de plus en plus difficile le routage électronique traditionnel (qui nécessite une première conversion optique-électronique puis, après routage électronique, la conversion inverse électronique-optique).

Les solutions actuelles se partagent entre les solutions utilisant l'optique intégrée (Agilent , ATT...) et celles utilisant les microsystèmes optiques appelés encore MOEMS (pour Micro-Opto-Electro-Mechanical-System) avec en particulier Lucent et Xross (voir les références).

L'invention s'inscrit dans cette dernière catégorie avec, comme dans l'art antérieur, l'utilisation favorable (mais non nécessaire) de micro-miroirs réalisés par les techniques de micro-technologies comme moyens de déflexion.

Elle diffère par l'architecture optique permettant de réaliser la fonction de routage et, dans le cas de l'utilisation de micro-miroirs comme moyens de déflexion, par le type et par le mode de fonctionnement des micro-miroirs pouvant être mis en jeu. Elle permet de surmonter la plupart des difficultés rencontrées dans les routeurs de l'art antérieur.

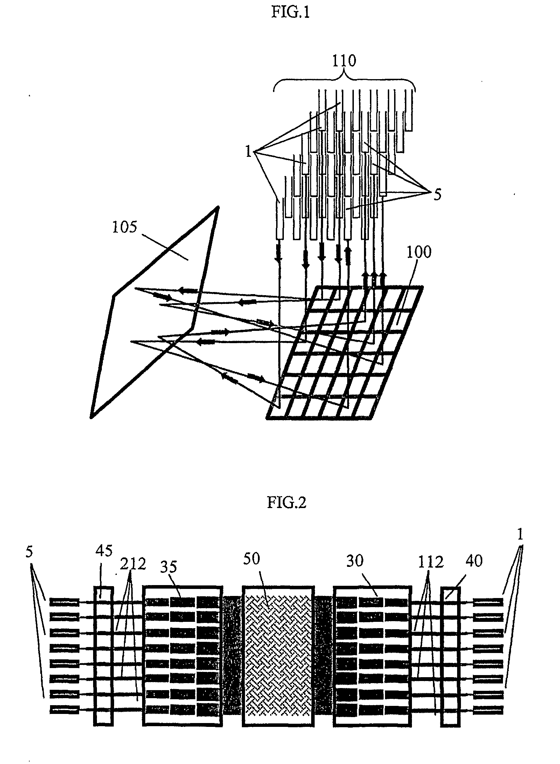

En effet les solutions actuellement étudiées et illustrées dans leur principe de fonctionnement par la figure 1 nécessitent l'utilisation de micro-miroirs à commande analogique et à double partie mobile capables d'orienter les faisceaux optiques défléchis dans toutes les directions de l'espace (angles $\theta$ et $\Phi$).

Ces solutions ne réclament donc que deux réflexions sur des miroirs mobiles à commande analogique pour réaliser l'opération de routage. Elles sont souvent mises en oeuvre avec une seule matrice de micro-miroirs analogiques 100 et un miroir de renvoi fixe 105 , comme le montre la figure 1 ; les fibres d'entrée 1 et de sortie 5 étant alors regroupées en une seule matrice 110.

Elles paraissent sur le papier extrêmement simples et élégantes mais pêchent à trois niveaux :

- les micro- miroirs à commande analogique et double partie mobile sont difficiles à réaliser technologiquement et les rendements de fabrication de matrices de tels micro-miroirs semblent aujourd'hui très faibles et peu satisfaisants.
- la commande analogique indispensable nécessite des asservissements électroniques très complexes et difficiles à gérer et entraîne des consommations électriques non négligeables.
- les excursions angulaires de chaque micro-miroir doivent être importantes et d'autant plus grandes que le nombre de points mis en jeu est élevé, ce qui complique encore la technologie de fabrication. Cela conduit aussi à des tensions de commande élevées ce qui, d'une part, est pénalisant pour la commande électrique, et qui induit, d'autre part, des interférences parasites difficiles à surmonter dans la commande des miroirs spatialement proches.
- Enfin, en cas de coupure électrique, l'utilisation de miroirs analogiques entraîne une perte de la confirguration du réseau, laquelle peut être très préjudiciable.

La solution de l'invention illustrée schématiquement par la figure 2 contourne ces quatre difficultés lorsqu'elle met en jeu des cascades de moyens de déflexion de faisceaux optiques $MD^1$ , $MD^2$ , $MD^3$ ,... $MD^I$ ,... $MD^N$ composés d'éléments de déflexion, ici de type micro-miroirs, de préférence digitaux dont les positions de déflexion sont stables et parfaitement reproductibles et qui ne nécessitent aucun asservissement électronique .

La réalisation de tels miroirs est technologiquement plus simple et peut conduire à d'excellents rendements de fabrication. Par ailleurs, l'excursion angulaire de tels miroirs pouvant être faible (par exemple entre 0,5 et 4°), les tensions de commande peuvent être réduites.

De plus l'architecture mise en jeu dans laquelle, comme nous le verrons dans la suite de l'exposé, chaque élément de déflexion de la cascade est conjugué optiquement avec le miroir de la cascade qui le précède et qui le suit par une relation objet-image, ce qui assure une excellente stabilité de l'alignement du système.

Elle conduit également à une très grande modularité car les mêmes types de moyens de déflexion (micro-miroirs ou autres) peuvent être utilisés pour réaliser des routeurs de complexité croissante par simple accroissement du nombre d'éléments formant les moyens de déflexion et du nombre de moyens de déflexion (favorablement identiques) de la cascade.

Enfin, elle est compatible, même pour des routeurs de grande complexité, avec l'utilisation de tous moyens de déflexion de faisceaux optiques permettant d'obtenir au moins deux positions de déflexion.

Il faut noter que la mise en oeuvre avantageuse de telles cascades suppose de pouvoir coupler efficacement un module optique de déflexion d'entrée et un module optique de déflexion de sortie, ce que l'état de la technique ne permet pas toujours de manière simple et fiable.

## 3. PRINCIPE MIS EN JEU DANS L'INVENTION

L'objectif général de l'invention est de réaliser un dispositif capable d'orienter les informations transportées par un nombre quelconques de signaux optiques d'entrées vers un nombre quelconque de sorties, grâce à une structure permettant d'utiliser diverses structures de modules de déflexion.

Elle propose à cet effet un dispositif de routage optique permettant de coupler chacune d'une pluralité de $N_E$ voies d'arrivée optique à l'une quelconque d'une pluralité de $N_S$ voies de sortie optique et orienter chacun des faisceaux optiques arrivant par les voies d'arrivée optique vers l'une quelconque des $N_S$ voies de sortie optique, comportant :

- un module d'entrée ayant $N_E$ entrées optiques, apte à mettre en forme chacun des faisceaux arrivant par les voies d'arrivée optique, de façon à obtenir une pluralité de faisceaux optiques mis en forme et avantageusement parallèles,
- un module de déflexion d'entrée apte à générer pour chacune des entrées une position quelconque choisie parmi un nombre $P_{TN}$ de positions de déflexion angulaire distinctes au moins égal au nombre $N_S$ de voies de sortie optiques, ce module de déflexion d'entrée comportant $N_E$ lignes comportant chacune une pluralité d'éléments de déflexion disposés en cascade et pouvant prendre chacun une pluralité de configurations de déflexion angulaire en nombre inférieur au nombre $P_{TN}$,
- un module de liaison apte à rassembler de façon bi-univoque sur $P_{TN}$ points de focalisation spatiale, respectivement, les $P_{TN}$ positions de déflexion angulaire de chacune des entrées, ce module étant apte à générer $P_{TN}$ faisceaux optiques intermédiaires,
- un module de déflexion de sortie ayant $P_{TN}$ entrées aptes à intercepter les $P_{TN}$ faisceaux optiques intermédiaires, et apte à générer, à partir des faisceaux optiques intermédiaires, $N_S$ faisceaux de sortie, ce module de déflexion de sortie comportant $N_S$ lignes comportant chacune une pluralité d'éléments de déflexion en cascade pouvant prendre une pluralité de configurations de déflexion angulaire en nombre inférieur au nombre $N_S$, et
- un module de sortie optique apte à mettre en forme chacun des $N_S$ faisceaux de sortie en sorte de pouvoir les appliquer aux $N_S$ voies de sortie, et dans lequel

  * dans chaque ligne, chaque élément de déflexion est couplé au précédent par un élément de conjugaison optique apte à réaliser une conjugaison objet-image entre cet élément de déflexion et le précédent,
  * chaque élément de conjugaison optique a un grossissement :

$$G_{I,I+1} = P_I{}^*(P_{I+1}-1) / (P_I-1)$$

où **$P_I$** et **$P_{I+1}$** représentent le nombre de positions angulaires pouvant être prises par les éléments de déflexion I et I+1 entre lesquels cet élément de conjugaison optique est disposé.

On entend par mise en forme des faisceaux la réalisation de faisceaux dont les caractéristiques optiques répondent à des spécifications déterminées (par exemple la divergence ou la taille des faisceaux...).

On appréciera que cette structure générale offre une grande souplesse dans le choix des modules de déflexion qui peuvent donc être du type connu, notamment avec des miroirs mobiles à commande analogique et à configurations multiples, ainsi que du type nouveau précité, c'est-à-dire à commande digitale et disposée en cascade.

Ainsi défini, un dispositif selon l'invention se distingue d'un dispositif de mutiplixage-démultiplixage, tel que défini dans le document de LI et WANG : "Optical Non-Blocking Multicast and Broadcast Interconnects using Multidimensional Multiplexing Concepts" dans le Journal of Lightware Technology, IEEE, New York, US, Vol 14, n°2, 1er février 1996, pp 129-138 - XP 000585263 ; ISSN 0733-8724, par le fait que c'est un dispositif de routage optique, et donc que le module d'entrée est apte à générer pour chacune des entrées une position quelconque choisie parmi une pluralité de positions possibles (dans le dispositif de mutiplixage-démultiplixage, les faisceaux sont diffractés dans toutes les directions possibles) et qu'il y a en outre un module de déflexion de sortie (au lien d'un module d'extraction au moyen de fentes). A fortiori ce dispositif selon l'invention se distingue de ce dispositif de mutiplixage-démultiplixage par la structure en cascade des modules de déflexion.

L'invention se prête au traitement de divers types de besoins.

Le cas le plus courant à traiter est celui rencontré dans les noeuds des réseaux de télécommunications optiques où les informations transportées par un nombre $N_E$ de fibres optiques d'entrée réparties soit en barrettes de $N_E$ fibres soit en matrices de $N'_E *N''_E$ fibres doivent être réorientées vers $N_S$ fibres optiques de sortie réparties soit en barrettes de $N_S$ fibres soit en matrices de $N'_S *N''_S$ fibres.

Toutefois, les voies d'entrée et de sortie peuvent être non seulement des fibres mais aussi l'espace libre, ou des sources telles que des diodes laser, etc...

De manière préférée, les voies d'entrée et les voies de sortie sont parallèles.

Selon des dispositions préférées de l'invention, éventuellement combinées :

- chaque élément de conjugaison associé à deux éléments de déflexion consécutifs comporte au moins deux lentilles en configuration confocale dont le rapport des focales est égal au grossissement recherché entre les deux éléments de déflexion,
- dans au moins une ligne, les éléments de déflexion optique ont un même nombre de positions angulaires, et le grossissement est égal à ce nombre,
- les éléments de déflexion sont des miroirs orientables au moins autour d'un axe de basculement.
- les éléments de déflexion sont des miroirs orientables suivant deux positions angulaires autour de chaque axe de basculement et le grossissement $G_{I,I+1}$ est égal à 2,
- les éléments de déflexion angulaire homologues au sein des lignes sont répartis en une pluralité d'ensembles en nombre égal au nombre d'entrées optiques.
- les ensembles ont des axes optiques parallèles.

Selon d'autres dispositions préférées de l'invention, éventuellement combinées :

- le module de liaison comporte un élément de focalisation réfractif (lentille) ou réflectif (miroir) permettant de regrouper l'ensemble des $P_{TN} *N_E$ faisceaux en $P_{TN}$ points de focalisation spatiale dans un unique plan focal image.
- les $N_E$ sorties du module de déflexion d'entrée sont situées dans le plan focal objet de l'élément de focalisation du module de liaison et les entrées du module de déflexion de sortie sont situées dans le plan focal image de ce module de liaison.
- le module de liaison comporte des éléments optiques d'augmentation et de diminution des écarts angulaires entre les $P_{TN}$ positions de déflexion angulaire respectivement générées par chacune des sorties du module de déflexion d'entrée.
- le module de liaison comporte une lentille de focalisation et un miroir de renvoi dont le plan focal image $F_{IM}$ est confondu avec le plan focal image de cette lentille de focalisation.
- le dispositif a une configuration repliée dans laquelle sont utilisées de mêmes matrices d'éléments pour les modules de déflexion d'entrée et de sortie, une moitié des éléments des matrices étant mise en jeu pour le module de déflexion d'entrée, l'autre moitié, symétrique par rapport au centre des différentes matrices, étant mise en jeu pour le module de déflexion de sortie.

Selon encore d'autres dispositions préférées de l'invention, éventuellement combinées :

- les modules comportent des éléments optiques disposés en barrettes ou en matrices.
- les modules comportent des éléments optiques de type micro-lentilles ou micro-miroirs pouvant être réalisés par les procédés de fabrication collective mis en jeu dans les micro-technologies .
- les éléments de déflexion d'entrée ou de sortie comportent des barrettes ou de matrices d'éléments miroirs individuellement adressables électriquement et situés dans des plans parallèles éventuellement inclinés en moyenne par rapport à l'axe optique général.

Selon encore d'autres dispositions préférées de l'invention, éventuellement combinées :

- le module de liaison a une configuration repliée et comporte des éléments optiques de basculement angulaire permettant de rassembler les différents faisceaux potentiellement défléchis des sorties du module de déflexion d'entrée dans un plan perpendiculaire à l'axe optique général puis d'opérer l'opération inverse sur les différents faisceaux de façon à les orienter sur chacune des entrées du module de déflexion de sortie.
- le module de liaison comporte au moins un élément de focalisation de type réfractif permettant de travailler dans une configuration perpendiculaire à l'axe optique général.
- les moyens de basculement comportent des barrettes ou des matrices de lentilles ou de miroirs, la focale des différents éléments formant les moyens de basculement étant calculée pour que chacune des conjugaisons optiques mises en jeu présente le même grossissement.
- les éléments de basculement angulaire constituent des éléments d'augmentation et de diminution des écarts angulaires entre les faisceaux défléchis potentiels mis en jeu.

Selon encore d'autres dispositions préférées de l'invention, éventuellement combinées :

- le dispositif comporte, avant le module de déflexion d'entrée, un composant diviseur permettant de partager en K parties égales ou inégales la puissance lumineuse de chacune des voies d'entrée et de disposer d'une matrice de K * $N_E$ faisceaux lumineux, chacun pouvant être orienté vers l'une quelconque des voies de sortie dont le nombre $N_S$ est au moins égal à K*$N_E$ .
- le composant diviseur est réalisé en optique intégrée.
- les composants diviseurs sont réalisés en optique espace libre et comprennent :

  • une première barrette de $N_E$ moyens de collimation (lentilles ou miroirs) qui permet de collimater les $N_E$ faisceaux lumineux issus de chacune des voies optiques d'entrée dans la direction de l'axe de la barrette,
  • une seconde barrette de $N_E$ moyens de collimation réflectifs ou réfractifs permettant de collimater les $N_E$ lignes de lumière formées,
  • une matrice de K*$N_E$ éléments optiques réfractifs ou réflectifs de mise en forme permettant de générer, à partir des $N_E$ lignes de lumière, K * $N_E$ faisceaux lumineux de caractéristiques optiques adaptées au module de déflexion d'entrée.

- le dispositif comporte, avant le module de déflexion d'entrée, un composant démultiplexeur permettant de séparer L variables optiques pouvant être utilisées comme support d'informations transportées, la connexion de ce composant avec chacune des voies optiques d'une barrette de $N_E$ fibres optiques d'entrée permettant de générer L * $N_E$ faisceaux lumineux appliqués au module de déflexion d'entrée, le nombre $N_S$ étant au moins égal à L * $N_E$ .
- le composant démutiplexeur est réalisé en optique intégrée.
- le composant est apte à séparer la longueur d'onde lumineuse $\lambda$ et est réalisé en optique intégrée.
- le composant est apte à séparer la longueur d'onde lumineuse $\lambda$ et est réalisé en optique espace libre et comprend :

  • une première barrette de $N_E$ moyens de collimation (lentilles ou miroirs) qui permet de collimater les $N_E$ faisceaux lumineux issus de chacune des voies optiques d'entrée avec l'ouverture angulaire adaptée,
  • une barrette de réseaux de diffraction comportant des traits orientés parallèlement à l'axe de la barrette de voies d'entrée et permettant de séparer spatialement différentes longueurs d'ondes $\lambda_1$, $\lambda_2$, ... $\lambda_L$ transportées par chacune des $N_E$ voies optiques d'entrée, la barrette de réseaux étant inclinée par rapport à des plans perpendiculaires à l'axe optique du système d'un angle dépendant de l'ouverture angulaire des faisceaux lumineux incidents et de l'écart des longueurs d'ondes des faisceaux adjacents diffractés par le réseau,
  • une barrette de moyens optiques permettant de réorienter suivant des directions parallèles chacun des L faisceaux lumineux de longueur d'onde $\lambda_1$, $\lambda_2$, ... $\lambda_L$ attachés à chacune des $N_E$ voies optiques d'entrée et générés par le réseau de diffraction,
  • une matrice de moyens optiques réfractifs ou réflectifs de mise en forme disposés en $N_E$ colonnes et L lignes et permettant éventuellement d'adapter les caractéristiques optiques des L * $N_E$ faisceaux lumineux obtenues au module de déflexion d'entrée.

Selon encore d'autres dispositions préférées de l'invention, éventuellement combinées :

- le dispositif comporte, respectivement avant le module de déflexion d'entrée et après le module de déflexion de sortie, un composant de démultiplexage de variables optiques en entrée, et un composant de multiplexage des mêmes variables en sortie.
- la variable optique considérée est la longueur d'onde $\lambda$ et les démultiplexeurs et les multiplexeurs utilisés sont réalisés en optique intégrée.
- la variable optique considérée est la longueur d'onde $\lambda$ et les démultiplexeurs et les multiplexeurs utilisés sont réalisés en optique espace libre.

Selon encore d'autres dispositions préférées de l'invention, éventuellement combinées :

- le dispositif est apte au démultiplexage-multiplexage de variables optiques caractérisé par la présence, d'un composant de démultiplexage de ces variables avant le module de déflexion d'entrée, et d'un composant de multiplexage de ces variables après le module de déflexion de sortie, et par le fait que :

- le démultiplexeur permet de séparer spatialement L variables optiques $v_1$, $v_2$... $v_L$ transportées par chacune des $N_E$ voies d'entrée , et de générer L * $N_E$ faisceaux lumineux parallèles de caractéristiques optiques adaptées et disposés en matrices de $N_E$ colonnes et de L lignes, chaque ligne étant attachée à une même variable optique $v_l$ ,
- permet de réorienter, à l'intérieur de chacune des L lignes, chacun des $N_E$ faisceaux lumineux attachés à la même variable optique vI et de générer, en sortie du module de déflexion de sortie, L lignes d'au moins $N_S$ = L * $N_E$ faisceaux potentiels.
- le multiplexeur permet de rassembler ces L lignes en une seule et de réinjecter dans une quelconque des voies de sortie disposées en barrettes et dont le nombre $N_S$ est au moins égal à L * $N_E$, un nombre quelconque de canaux attachés aux différentes variables optiques $v_l$ compris entre 1 et L.

- la variable optique considérée est la longueur d'onde $\lambda$ et les démultiplexeurs et les multiplexeurs utilisés sont réalisés en optique intégrée.
- la variable optique considérée est la longueur d'onde $\lambda$ et les démultiplexeurs et les multiplexeurs utilisés sont réalisés en optique espace libre.

Selon encore d'autres dispositions préférées de l'invention, éventuellement combinées :

- des éléments de contrôle de fonctionnement sont placés en sortie d'une partie au moins du module de déflexion d'entrée ou du module de sortie, ces éléments de contrôle comportant des éléments de séparation spatiale permettant de prélever une partie des faisceaux.
- les faisceaux mis en jeu au cours des différentes conjugaisons optiques 'objet-image' ont des « waist » dont les positions sont localisées au niveau des éléments des différents éléments de déflexion.
- des lentilles de collimation donnent aux faisceaux un « waist » et en ce qu'un module de mise en forme des faisceaux d'une barrette ou d'une matrice de micro-lentilles de transport est prévu qui permet de déporter la position des « waist ».
- les voies d'entrée et de sortie sont des fibres.
- le dispositif comporte un élément ou un ensemble d'éléments de conjugaison supplémentaires disposé entre le module de déflexion d'entrée et le module de liaison et/ou entre le module de déflexion de sortie et le module de liaison.

Il est à noter que l'élément ou l'ensemble des éléments de conjugaison supplémentaires permet d'ajuster la valeur des écarts angulaires entre les faisceaux défléchis. De façon avantageuse, chaque élément de conjugaison supplémentaire comporte deux lentilles placées en configuration confocales.

D'une façon générale, les lentilles utilisées dans le module de l'invention sont de préférence des micro-lentilles réalisées suivant les procédés de fabrication, généralement collective, mise en jeu dans les micro-technologies.

L'invention permet en particulier de donner des réponses à différents types de routeurs ou de brasseurs des informations optiques rencontrés dans les systèmes de télécommunications optiques :

- routeur point par point de l'ensemble des informations transportées par une fibre optique quelconque d'entrée $FO_{Ie}$ (ou $FO_{Ie,Je}$ dans le cas de barrettes) vers une fibre quelconque de sortie $FO_{Is}$ (ou $FO_{Is,Js}$ dans le cas de barrettes).

    Plusieurs canaux d'informations étant en général transportés par une même fibre et par différentes longueurs d'ondes optiques dans les systèmes DWDM ('Dense Wavelength Division Multiplexing'), il est donc indispensable que le dispositif de routage puisse réaliser cette opération de routage point par point indépendamment des longueurs d'ondes transportées .

    Bien entendu , cette remarque s'applique si le multiplexage mis en jeu utilise d'autres paramètres que la longueur d'onde (par exemple la polarisation lumineuse ou la longueur temporelle de trains d'informations optiques).

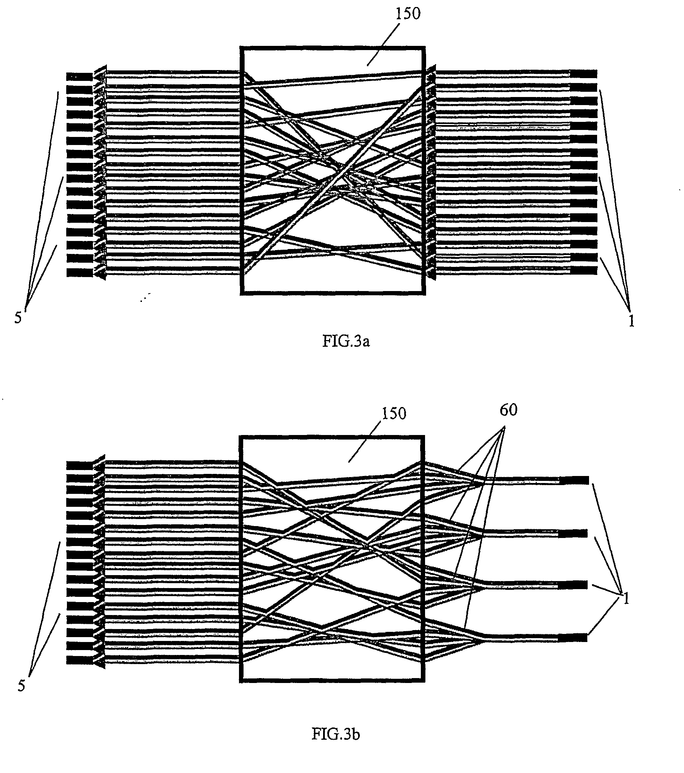

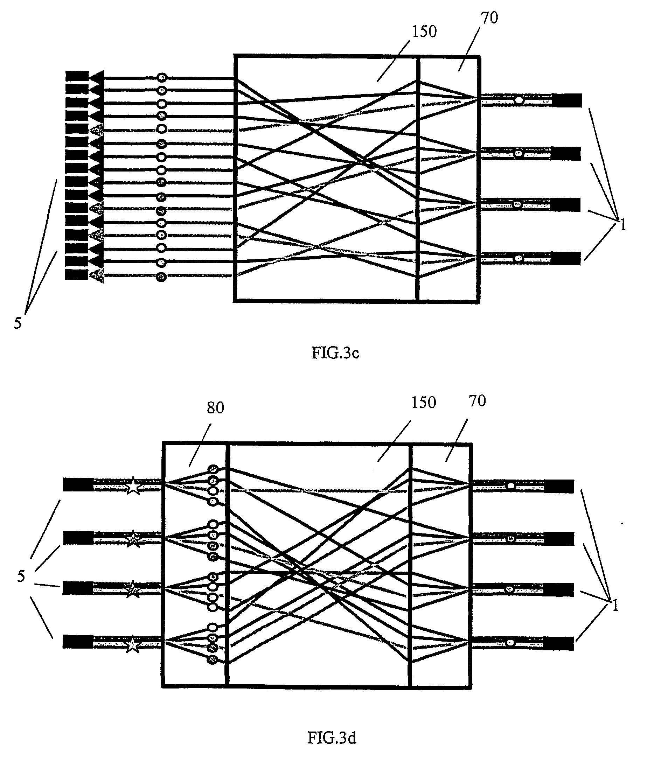

    Ce type de routeur 150 est illustré schématiquement par la figure 3a avec 16 fibres d'entrée 1 (disposées en barrettes pour raison de simplification) transportant 4 longueurs d'ondes différentes $\lambda_1$, $\lambda_2$, $\lambda_3$, $\lambda_4$ chacune et dont les informations transportées peuvent être orientées grâce au routeur 150 vers n'importe laquelle des 16 fibres de sortie 5.

    L'architecture général du routeur point à point de l'invention est représentée figure 2.
- routeur diviseur de puissance dans lequel l'information transportée par chaque fibre d'entrée $FO_{Ie}$ et en général regroupées en barrettes est partagée (favorablement à l'identique) en K parties chaque partie transportant par exemple une fraction 1/K de la puissance transportée dans la fibre $F_{Ie}$) pouvant chacune être orientée vers une fibre de sortie distincte indexée $FO_{Is,Js}$ dans le cas d'une répartition matricielle (si la puissance optique de chaque fibre d'entrée est divisée en K parties, il faudra bien entendu disposer d'au moins K*$N_E$ = $N_S$ fibres de sortie).

Ce type de routeur est illustré schématiquement par la figure 3b avec 4 fibres d'entrée 1 transportant 4 longueurs d'ondes différentes $\lambda_1$, $\lambda_2$, $\lambda_3$, $\lambda_4$ chacune et dont les informations transportées , partagées en puissance par 4 diviseurs 4 voies 60 peuvent être orientées grâce au routeur 150 vers n'importe laquelle des 16 (4 * 4) fibres de sortie 5.

- routeur démultiplexeur de longueurs d'ondes dans lequel chacun des canaux de longueur d'onde quelconque $\lambda_L$ transportée par n'importe quelle fibre d'entrée $FO_{Ie}$ en général regroupées en barrettes peut être orientée de façon distincte vers n'importe quelle fibre de sortie $FO_{Is,Js}$ en général regroupées en matrices . Si chaque fibre d'entrée transporte L canaux de longueurs d'ondes distinctes , il y aura donc au total $L*N_E$ canaux distincts et il faudra donc disposer d'au moins $N_S = L*N_E$ fibres de sortie.

Ce type de routeur est illustré figure 3c avec 4 fibres d'entrée 1 véhiculant 4 longueurs d'ondes différentes $\lambda_1$, $\lambda_2$, $\lambda_3$, $\lambda_4$ chacune et dont les 16 canaux d'informations (4 longueurs d' ondes pour chacune des 4 fibres d'entrée) sont séparées par le démultiplexeur 70 puis orientés par le routeur 150 vers n'importe laquelle des 16 fibres de sortie 5.

- routeur démultiplexeur-multiplexeur de longueurs d'ondes dans lequel les L canaux de longueur d'ondes distinctes $\lambda_L$ transportés par chacune des $N_E$ fibres d'entrée sont mélangés et réorientés vers un nombre $N_S$ équivalent de fibres optiques de sortie transportant également chacune L canaux de longueurs d'ondes distinctes.

Ce type de routeur est illustré figure 3d avec 4 fibres d'entrée 1 véhiculant chacune 4 longueurs d'ondes différentes $\lambda_1$, $\lambda_2$, $\lambda_3$, $\lambda_4$ et dont les 16 canaux d'informations (4 longueurs d' ondes pour chacune des 4 fibres d'entrée) sont séparées par le démultiplexeur 70, ré-orientés par le routeur 150 puis remultiplexés par le multiplexeur 80 vers les 4 fibres de sortie 5 recevant donc chacune 4 canaux de longueurs d'ondes $\lambda_1$, $\lambda_2$, $\lambda_3$, $\lambda_4$ issue de l'une quelconque des fibres d'entrée.

De manière plus générale le dispositif de l'invention peut effectuer l'ensemble des opérations de routage rencontrées dans les systèmes de télécommunications optiques de type DWDM et en particulier enlever ou rajouter une ou des longueurs d'ondes transportées par une ou plusieurs fibres optiques quelconques d'un noeud de réseau pour les redistribuer dans une ou plusieurs fibres optiques du même noeud de réseau (fonction 'add and drop' généralisée).

Comme signalé précédemment, ce type de fonctionnalité peut être appliquée à d'autres paramètres optiques que la longueur d'onde et en particulier la polarisation, la durée des impulsion lumineuses.

Dans le cas des routeurs point par point (c'est-à-dire sans multiplexage de variables optiques), le principe général mis en jeu dans l'invention peut être décrit par la succession des sous- systèmes suivants illustrés par la figure 2.

- un sous-système d'entrée 40 de mise en forme des faisceaux optiques issus des $N_E$ fibres optiques d'entrée 1, en particulier en terme d'ouverture numérique $\Delta\varphi_E$ de façon à adapter cette ouverture numérique au système de déflexion décrit par la suite (condition de séparation angulaire des différents faisceaux défléchis, entre autres). Ce sous-système d'entrée génère donc $N_E$ faisceaux optiques 112, d'ouverture adaptée, tous parallèles à l'axe optique du dispositif. Ce sous-système 40 sera désigné par $MIFO^E$ (pour module de MIse en FOrme d'Entrée).

- un premier sous-système de déflexion des faisceaux optiques 30 permettant de générer, à partir de chacun des $N_E$ faisceaux optiques mis en forme par le sous- système d'entrée 40, $N_S$ positions de déflexion angulaire. Ce sous-système met en jeu le Module d'Amplification de Position Angulaire (en abrégé MAPA) décrit dans l'invention précédente (demande de brevet du même jour) et qui utilise au moins une cascade de moyens de déflexion de faisceaux optiques $MD^{1E}$ , $MD^{2E}$, ... $MD^{IE}$,... $MD^{NE}$. Ce sous-système sera désigné par $MAPA^E$ ('E' pour Entrée)

- un module de liaison MOLI (pour MOdule de Liaison) 50 qui permet de relier de façon biunivoque chacune des $N_S$ positions de déflexion angulaire données par chacun des NE éléments du dernier moyen de déflexion MDNE du sous- système 30 aux NS éléments du premier moyen de déflexion MD1S du second sous-système de déflexion des faisceaux optiques 35 .

- un second sous-système de déflexion 35 permettant de réorienter les différents faisceaux optiques effectivement défléchis par le premier sous-système de déflexion et de former ainsi $N_S$ faisceaux optiques 212 à nouveau parallèles à l'axe optique du système. Ce second sous-système de déflexion met en jeu un second module MAPA favorablement identique au premier et désigné par $MAPA^S$ ('S' pour Sortie).Ce second module $MAPA^S$ utilise au moins une cascade de moyens de déflexion de faisceaux optiques $MD^{1S}$, $MD^{2S}$, ... $MD^{IS}$,... $MD^{NS}$

- un sous-système de sortie 45 de mise en forme des $N_S$ faisceaux optiques de sortie 212, rendus parallèles par le second sous-système de déflexion, et dont la fonction est de réinjecter ces $N_S$ faisceaux optiques de sortie 212 dans les $N_S$ fibres optiques de sortie 5 avec le maximum d'efficacité. Ce sous- système sera désigné par $MIFO^S$.

Dans le cas des routeurs diviseur de puissance, des routeurs démultiplexeur- multiplexeur et des routeurs démultiplexeur il faut insérer respectivement dans la chaîne précédente les sous-systèmes de division de puissance 60 ou de démultiplexage 70 en entrée et le sous-système de multiplexage 80 en sortie. Suivant les types de sous-systèmes choisis précédemment, ceux-ci pourront être insérer avant ou après les sous-systèmes d'entrée ou de sortie de mise en forme des faisceaux optiques.

## 4.DESCRIPTION DETAILLEE DE L'INVENTION

Des objets, caractéristiques et avantages de l'invention ressortent de la description qui suit, donnée à titre d'exemple illustratif non limitatif, en regard des dessins annexés sur lesquels :

- La figure 1 montre une représentation schématique des routeurs optiques de type 'espace libre' actuellement développés.
- La figure 2 montre une représentation schématique du routeur optique de l'invention.
- Les figures 3a à 3d donnent une représentation schématique des différents routeurs optiques pouvant être réalisés avec l'architecture de l'invention.
- Les figures 4a et 4b illustrent les configurations possibles du sous-système de mise en forme des faisceaux pour 2 inclinaisons ($\varphi = 0$ et $\varphi \neq 0$).
- La figure 5 donne un exemple de réalisation possible du sous-système de déflexion d'entrée.
- Les figures 6a , 6b , 6c , 6d , 6e , 6f illustrent le principe de fonctionnement du module de liaison et différentes configurations possibles permettant de réduire l'encombrement de ce module.
- La figure 7 donne un exemple de réalisation possible d'un routeur point à point selon l'invention.
- La figure 8 donne un exemple de réalisation possible d'une partie d'un routeur diviseur de puissance utilisant comme diviseur un composant optique intégré.
- La figure 9 donne un exemple de réalisation possible d'un diviseur de puissance utilisant comme diviseur un composant optique espace libre.
- La figure 10 donne un exemple de réalisation possible d'un démultiplexeur ou démultiplexeur - multiplexeur de longueurs d'ondes utilisant un composant optique intégré de type AWG.
- La figure 11 donne un exemple de réalisation possible de l'élément démultiplexeur ou multiplexeur utilisant un composant optique espace libre.
- La figure 12 donne une représentation schématique d'un routeur démultiplexeur- multiplexeur selon l'invention.
- Les figures 13a et 13b donnent une représentation schématiquement de moyens de contrôle utilisables dans l'invention.
- Les figures 14a, 14b, 14c, 14d donnent des exemples de réalisation possible de routeurs point à point selon l'invention et dont la complexité (nombre de fibres en entrée et sortie) est croissante. Ces différents exemples mettent donc en jeu un nombre croissant de moyens de déflexion d'entrée et de sortie : 2 (figure 14a), 3 (figure 14b), 4 (figure 14c), 5 (figure 14d).
- La figure 15 est une vue schématique d'un routeur selon l'invention dans lequel des matrices ou barrettes comportent à la fois une partie du module de déflexion d'entrée et une partie du module de déflexion de sortie ;
- La figure 16 est une vue d'une telle matrice, et
- La figure 17 est un schéma de mise en forme des faisceaux optiques d'entrée permettant à la fois l'optimisation de leurs caractéristiques optiques (divergence et dimension des « waist ») et les dimensions géométriques des modules de mise en forme d'entrée et de sortie.

### 4.1 routeur optique point par point

C'est le dispositif de base de l'invention dont la fonctionnalité est représentée schématiquement figure 3a. Il est composé des différents sous-systèmes, évoqués au paragraphe 3 et illustrés figure 2, que nous allons décrire plus en détail .

### • sous-système d'entrée de mise en forme des faisceaux optiques

Le faisceau lumineux émis en sortie d'une fibre optique peut être assimilé à un faisceau gaussien dont la répartition d'intensité suit à peu prés une loi de la forme

$$I(x,y,z) = \exp[-2(x^2 + y^2) / \omega(z)^2]$$

$\omega(z)$ représente donc la demi- largeur à $1/e^2$ de cette répartition d'intensité suivant deux axes orthogonaux Ox et Oy situés dans un plan de coordonnées z perpendiculaire aux faisceaux lumineux. Les faisceaux gaussiens sont intéressants car ils ont la propriété de rester gaussiens au cours d'une succession de conjugaisons optiques. Dans de tels faisceaux, $\omega(z)$ passe par une valeur minimum appelée 'waist' (resserrement ou 'taille' en anglais) qui détermine les caractéristiques de propagation et en particulier la divergence du dit faisceau. Si $\omega_l$ est la valeur du rayon du waist d'un faisceau gaussien $F_l$, sa divergence angulaire $\delta\Phi_l$ totale sera :

$$\delta\Phi_I = 2\lambda / \Pi * \omega_I \text{ avec } \Pi = 3.1416...$$

Au cours d'une conjugaison optique par une lentille ou un miroir (ou un système de lentilles et/ou de miroirs) de focale $f_I$, le 'waist' $\omega_I$ devient $\omega_{I+1}$ avec :

$$\omega_{I+1} = \lambda * f_I / \Pi * \omega_I$$

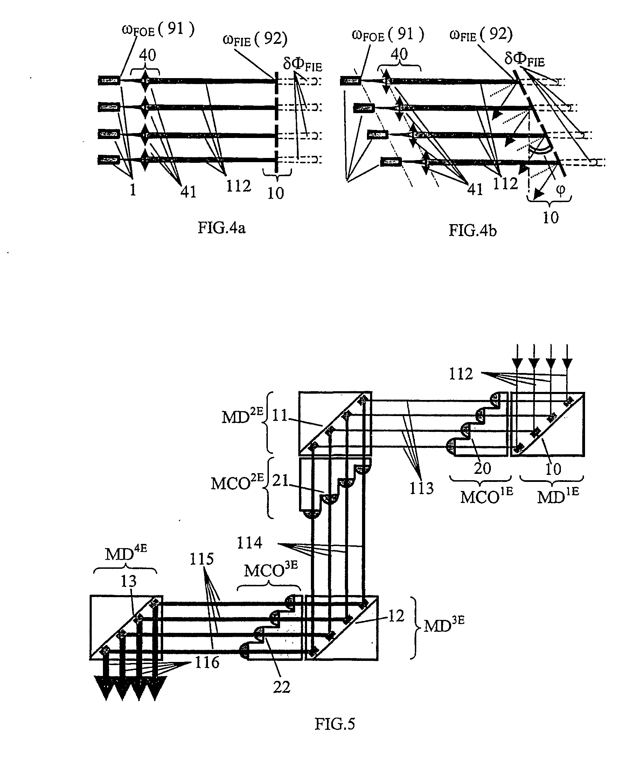

Le système de mise en forme d'entrée **40** est représenté schématiquement figure 4a dans une configuration en ligne où l'angle d'inclinaison $\varphi$ des composants sur l'axe optique est égal à 0 et figure 4b dans le cas général des systèmes à miroirs pour lesquels $\varphi$ est différent de 0 et dans lesquels, pour conserver une parfaite symétrie entre les différents faisceaux optiques mis en jeu, chaque sous-système doit globalement être incliné du même angle $\varphi$.

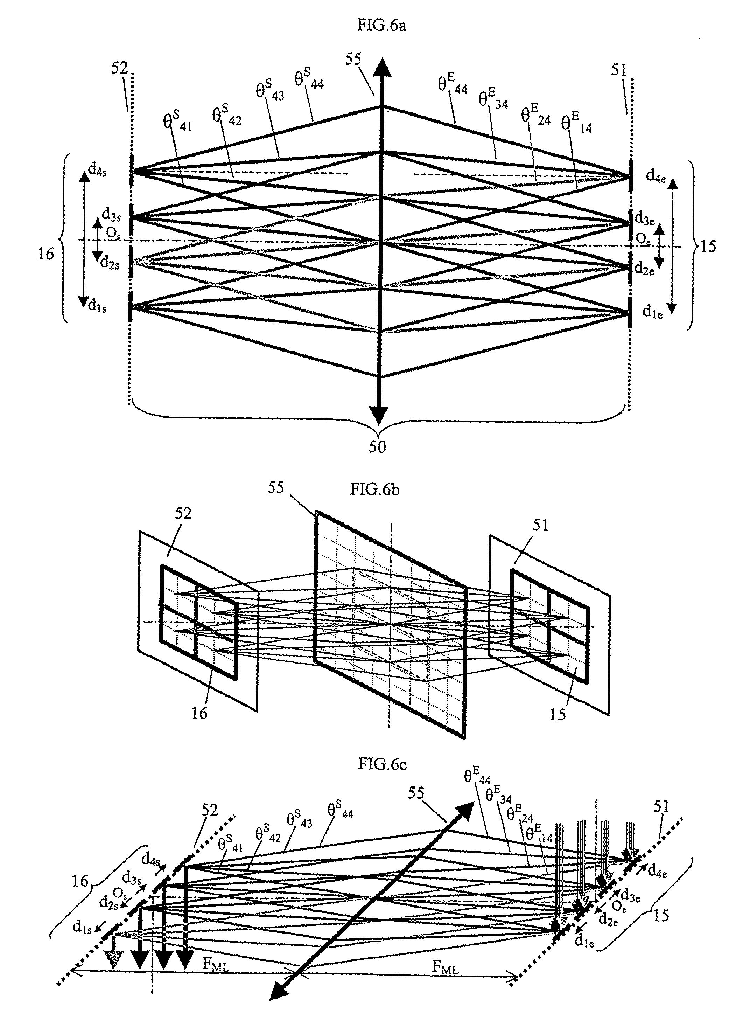

Ce système de mise en forme doit servir à collimater les différents faisceaux optiques **112** issue des fibres d'entrée et incidents sur les différents éléments du premier moyen de déflexion $MD^{1E}$ du Module d'Amplification de Position Angulaire MAPA (cas de la figure 5). Il doit aussi assurer le parallélisme de tous ces faisceaux **112** et déterminer leur ouverture angulaire afin qu'après déflexion par les différents éléments du premier moyen de déflexion chaque faisceau défléchis soient angulairement séparées de ces voisins. Si $\delta\theta_1$ est la déflexion angulaire entre deux faisceaux adjacents défléchis par les premiers éléments de la cascade de micro-miroirs et $\delta\Phi_{FIE}$ l'ouverture angulaire de ces faisceaux d'entrée, cette condition s'écrit :

$$\delta\Phi_{FIE} < \delta\theta_1$$

C'est cette condition qui sert à déterminer la focale $\mathbf{f_{MFE}}$ des éléments du sous-système de mise en forme d'entrée car:

$$\delta\Phi_{FIE} = 2\lambda / \Pi * \omega_{FIE}$$

et

$$\omega_{FIE} = \lambda * f_{MFE} / \Pi * \omega_{FOE}$$

où $\omega_{FOEe}$ représente la valeur du 'waist' **91** des faisceaux émis par les fibres optiques d'entrée **1** et $\omega_{FIE}$ la valeur du 'waist' **92** des faisceaux optiques collimatés par les moyens de mise en forme d'entrée **40** En combinant les équations précédentes on obtient :

$$f_{MFE} > 2\omega_{FOE} / \delta\theta_1$$

Application numérique: $\omega_{FOE} = 4\mu m$ et $\delta\theta_1 = 1°$ conduisent à $f_{MFE} > 460 \ \mu m$.
Ou : $\omega_{FOE} = 4\mu m$ et $\delta\theta_1 = 4°$ conduisent à $f_{MFE} > 115 \ \mu m$

En pratique , $f_{MFE}$ sera choisie plus grand (par exemple 1 mm dans l'exemple donné) pour disposer de faisceaux optiques défléchis nettement séparés angulairement .

Si le nombre de fibres optiques d'entrée est $N_E$ , le sous- système d'entrée devra donc avoir $N_E$ éléments optiques de mise en forme **41.**

Ces éléments, qui seront favorablement des micro-lentilles ou des combinaisons de micro-lentilles (cas illustré figures 4a et 4b) ou des micro-miroirs ou des combinaisons de mirco-miroirs de focale $f_{MFE}$, donneront $N_E$ faisceaux parallèles **112** d'ouverture $\delta\Phi_{FIE}$ incidents respectivement sur $N_E$ éléments de déflexion du premier moyen de déflexion $MD^{1E}$ (**10**) de la cascade. Bien entendu la configuration de ces différents groupes de $N_E$ éléments sera identique (élément unique ou barrettes ou matrices d'éléments d'espacements identiques regroupant les éléments homologues au sein des diverses lignes du module considéré).

Il est donc possible d'indexer chaque élément composant le module d'entrée dans le cas le plus général (matrice de fibres de $N'_E * N''_E = N_E$) par deux indices $I_e$ et $J_e$ , $I_e$ étant l'indice ligne (variant de 1 à $N'_E$) et $J_e$ l'indice colonne (variant de 1 à $N''_E$) des différentes matrices d'éléments .

Chaque fibre optique d'entrée 1 sera donc indexée $FO^E_{Ie,Je}$.

Chaque élément des moyens de mise en forme 40 des faisceaux optiques d'entrée sera indexé $MF^E_{Ie,Je}$.

Chaque faisceau optique 112 incident sur les éléments du premier moyen de déflexion d'entrée $MD^{1E}$ sera indexé $FI_{Ie,Je}$.

Chaque élément de déflexion du premier moyen de déflexion d'entrée $MD^{1E}$ **(10)** de la cascade sera indexé $ED^{1E}_{Ie,Je}$ et ainsi de suite, $ED^{2E}_{Ie,Je}$ pour le second moyen de déflexion $MD^{2E}$ **(11)**,... $ED^{NE}_{Ie,Je}$ pour le moyen $MD^{NE}$. Il y a donc correspondance biunivoque entre chacune des fibres d'entrée et chacun des éléments des sous- systèmes . Pour des raisons de simplicité évidente il est naturel de choisir des sous- systèmes de dimensionnement géométrique identique (espacement des éléments des différentes barrettes suivant l'axe commun ou des éléments des différentes matrices suivant les deux axes communs pour tous les sous-systèmes).

**• sous- système de déflexion d'entrée et de multiplication du nombre de positions angulaires potentiellement prises par les faisceaux optiques d'entrée :**

Ce sous-système **30** illustré par exemple par le schéma de la figure 5 utilise un premier module MAPA d'entrée $MAPA^E$ décrit en détail dans la demande de brevet du même jour, comportant une cascade de N moyens de déflexion d'entrée $MD^{1E}$ **(10)**, $MD^{2E}$ **(11)**, ... $MD^{IE}$ ,... $MD^{NE}$ telle que :

o   deux moyens consécutifs $MD^{I+1E}$ et $MD^{IE}$ de la cascade soient conjugués optiquement deux à deux avec le grossissement $G_{I+1,I}$ par des moyens optiques de conjugaison $MCO^{IE}$,

o   le nombre total de positions de déflexion angulaire $P_{NT}$ **potentiellement** générées par chaque élément $ED^{NE}_{Ie,Je}$ du dernier moyen de déflexion $MD^{NE}$ soit au moins égal au nombre Ns de fibres de sortie et configuré dans une configuration géométrique homothétique de celle des fibres de sortie (répartition linéaire de point de déflexion si les fibres de sorties sont réparties en barrette linéaire , matrice de points de déflexion si les fibres de sortie sont réparties en matrice).

**Potentiellement** signifie que chaque élément $ED^{NE}_{Ie,Je}$ du dernier moyen de déflexion $MD^{NE}$ de la cascade des moyens de déflexion est calculé pour fournir $P_{TN}$ positions de déflexion angulaire distinctes mais que parmi ces $P_{TN}$ positions, une seule (différente pour chacun des éléments) sera effectivement prise par le faisceau lumineux attaché à chaque élément $ED^{NE}_{Ie,Je}$.

On peut aussi dire que, pour chaque entrée du module, il y a une ligne comportant une cascade de moyens individuels, les moyens individuels qui sont homologues au sein de ces lignes étant regroupés au sein des moyens précités.

En sortie du sous-système de déflexion d'entrée, il ne peut donc exister qu'un seul faisceau lumineux effectivement défléchi par élément $ED^{NE}_{Ie,Je}$ , et donc au total $N_E$ faisceaux défléchis ayant chacun une position de déflexion angulaire distincte prise parmi les $P_{TN}$ positions de déflexion potentielles que peuvent fournir chacun des éléments $ED^{NE}_{Ie,Je}$ . Le nombre $P_{TN}$ pourra être plus grand que $N_E$ soit parce que le sous système de déflexion ne permet de générer que certaines valeurs particulières (par exemple multiples de 2 ou de 4 comme se sera en général le cas avec les modules MAPA décrits dans l'invention précédente) soit parce que le nombre de fibres de sortie $N_S$ est plus grand que le nombre de fibres d'entrée $N_E$ afin d'assurer une meilleure flexibilité au système de routage (redondance ou mise en attente de nouvelles lignes). Cette remarque s'appliquent d'ailleurs au niveau de l'entrée où certaines des $N_E$ fibres d'entrée peuvent être en attente et donc de manière temporaire ne pas transporter d'informations pour par exemple assurer une redondance en cas de panne de certaines voies.

Pour que le nombre de faisceaux défléchis en sortie de chaque élément de déflexion de deux moyens de déflexion consécutifs $MD^{I,E}$ et $MD^{I+1,E}$ soient tous distincts et angulairement équidistants, le grossissement $G_{I+1,I}$ réalisé par les moyens de conjugaison optique est donné par la formule générale :

$$G_{I,I+1} = P_I * (P_{I+1} - 1) / (P_I - 1)$$

dans laquelle $P_I$ et $P_{I+1}$ représentent le nombre de positions angulaires pouvant être prises par les éléments de déflexion des moyens de déflexion $MD^{IE}$ et $MD^{I+1,E}$. En particulier (demande de brevet du même jour), si les différents moyens de déflexion mis en jeu sont identiques $P_I = P_{I+1} = P$ pour toutes valeurs de I, on obtient :

$$G_{I,I+1} = P$$

Le nombre total $P_{TN}$ de positions de déflexion angulaire équidistantes en sortie de chacun des éléments est :

$$P_{TN} = P_1 * P_2 * P_3 * ... P_I * ... P_N$$

ou , si $P_1 = P_2 = ... P_I ... = P_N$ :

$$P_{TN} = P^N$$

La figure 5 montre une représentation possible du sous-système de déflexion de l'invention dans le cas d'un module MAPA comportant une cascade de N=4 moyens de déflexion 10, 11, 12, 13 disposés en barrettes de chacun 4 éléments de déflexion. Les moyens optiques de conjugaison 20, 21, 22 comportent donc aussi au moins N-1 = 3 éléments et sont disposés dans une configuration objet-image de grossissement $G_{I,I+1} = 2$ qui signifie que dans l'exemple de la figure 5 les éléments de déflexion de type micro-miroirs peuvent chacun présenter P = 2 positions angulaires autour d'au moins un axe de direction commune pour tous les éléments . Dans le cas particulier de la figure 5 où le nombre de moyens de déflexion est égal à 4 et $P_1 = P_2 = P_3 = P_4 = P = 2$, chacun des éléments de chaque moyen de déflexion $MD^{IE}$ est donc capable de générer pour chaque faisceau incident 2 faisceaux défléchis. Il y aura donc en sortie de chacun des éléments des moyens de déflexion $MD^{1E}$ **(10),** $MD^{2E}$ **(11),** $MD^{3E}$ **(12),** $MD^{4E}$ **(13)** respectivement 2, 4, 8, 16 faisceaux lumineux potentiellement défléchis situés dans le plan de la figure 5 si on suppose que la direction de rotation commune des éléments de déflexion de type micro-miroirs est perpendiculaire à ce plan.

La multiplication du nombre de ces faisceaux défléchis potentiels **113**, **114,115** ... à partir des faisceaux incidents **112** sur les premiers éléments du moyens de déflexion $MD^{1E}$ **(10)** est symbolisée par une largeur croissante des traits représentant ces différents faisceaux défléchis en sortie de chaque étage de la cascade.

Dans le cas le plus général d'une répartition matricielle , chaque élément $ED^{NE}_{Ie,Je}$ du dernier moyen de déflexion $MD^{NE}$ génèrera une matrice de $P_{TN}$ positions de déflexion angulaire d'au moins $N'_S$ lignes et $N''_S$ colonnes si la répartition des fibres de sortie est une matrice de $N'_S * N''_S$ fibres.

Pour simplifier et sans que cela ne nuise à la généralité de l'invention, on supposera que le nombre de positions de déflexion générées par chaque élément $ED^{NE}_{Ie,Je}$ du dernier moyen de déflexion $MD^{NE}$ est égal à $N'_S * N''_S$.

Il faut noter ici que dans un routeur point à point le nombre $N_S$ de fibres optiques de sortie peut être supérieur ou égal au nombre $N_E$ de fibres d'entrée pour les besoins de redondance ou d'anticipation évoqués plus haut mais comme une fibre d'entrée ne peut, dans ce type de routeur, être connectée qu'à une seule fibre de sortie il ne peut pas y avoir plus de $N_E$ fibres parmi les $N_S$ de sortie transportant réellement des informations.

Les $N'_S * N''_S$ valeurs de la matrice de positions de déflexion angulaire générées par chaque élément $ED^{Ne}_{Ie,Je}$ en sortie du premier module $MAPA^E$ peuvent être indexées $\theta^E_{Is,Js,Ie,Je}$. $I_s$ désignant l'indice ligne et $J_s$ l'indice colonne de cette matrice de déflexion angulaire; $I_e$ et Je désignant l'élément $ED^{NE}_{Ie,Je}$ dont sont issus les faisceaux de la matrice de position angulaire .

Il y a donc au total **$N'_S * N''_S * N'_E * N''_E$** positions de déflexion angulaire potentielles en sortie du premier module $MAPA^E$. Ces positions de déflexion sont potentielles car dans une configuration donnée de la cascade des moyens de déflexion, chaque élément (parmi les $N'_E * N''_E$) du module $MAPA^E$ d'entrée ne génère qu'une position angulaire parmi les $N'_S * N''_S$ possibles. Cette position est différente pour chacun des éléments de déflexion car dans un routeur point à point une fibre d'entrée n'est, dans une configuration donnée, connectée qu'à une et une seule fibre de sortie.

Si **$N'_E * N''_E = N'_S * N''_S$** (cas le plus classique), c'est à dire si le nombre de fibres d'entrée est égal au nombre de fibres de sortie, l'ensemble des positions de déflexion angulaire potentielles est **effectivement occupée** par un des $N'_E * N''_E$ faisceaux incidents $FI_{Ie,Je}$ en sortie du premier module $MAPA^E$ et chacun des $N'_E * N''_E$ éléments $ED^{NE}_{Ie,Je}$ du dernier moyen de déflexion $MD^{NE}$ de ce module défléchit le faisceau optique incident $FI_{Ie,Je}$ qui lui correspond suivant une et une seule des $N'_S * N''_S$ ($= N'_E * N''_E$) positions angulaires potentielles $\theta^E_{Is,Js,Ie,Je}$.

Si **$N'_S * N''_S$** est supérieur à **$N'_E * N''_E$** certaines positions angulaires (leur nombre étant égal à la différence **$N'_S * N''_S - N'_E * N''_E$**) ne sont effectivement pas occupées et certaines fibres de sortie ne seront pas connectées à une fibre d'entrée dans une configuration de routage donnée (ces fibres non connectées peuvent être par exemple des fibres de secours ou des fibres en attente pour anticiper une augmentation future du nombre de fibres optiques d'entrée) .

Pour simplifier la présentation , on supposera dans la suite que **$N'_E * N''_E = N'_S * N''_S$**.

Il faut donc maintenant faire correspondre de manière biunivoque chacune des **$N'_S * N''_S$** positions angulaires différentes $\theta^E_{Is,Js,Ie,Je}$ générées par chacun des éléments $ED^{NE}_{Ie,Je}$ du dernier moyen de déflexion $MD^{NE}$ du premier module $MAPA^E$ aux différents éléments $E1^E_{Is,Js}$ du premier moyen de déflexion $MD^{1S}$ du second sous-système de déflexion $MAPA^S$.

C'est la fonction du second sous-système clé de l'invention, le module de liaison MOLI .

**• module de liaison**

Le module de liaison **50** doit réaliser la correspondance biunivoque entre les **N'$_S$ \* N''$_S$** positions de déflexion angulaire et les **N'$_S$ \* N''$_S$** éléments de déflexion ED$^{1S}{}_{Is,Js}$ du premier moyen de déflexion MD$^{1S}$ du sous-système de sortie MAPA$^S$.

Son principe de fonctionnement est illustré par la figure 6a en représentation planaire et par la figure 6b dans une perspective qui permet de mieux appréhender le fonctionnement du module de liaison dans les configurations matricielles (matrice de 4 éléments sur la figure 6b) des différents sous-systèmes .

Pour des raisons de compréhension, les modules de liaison des figures 6a et 6b. mettent en jeu des moyens optiques et de déflexion en ligne perpendiculaires à l'axe optique du système ($\varphi = 0$) qui suppose l'utilisation de moyens de déflexion non réflectifs. Le système de l'invention qui utilisent favorablement des miroirs comme moyens de déflexion implique $\varphi \neq 0$. Cette particularité nécessite le plus souvent des adaptations d'architecture du module de liaison examinées plus loin, mais qui ne modifient en rien le principe de base sur lequel repose le module MOLI que nous allons décrire maintenant.

Tous les faisceaux potentiellement issus des différents éléments ED$^{NE}{}_{Ie,Je}$ avec un angle de déflexion $\theta^E{}_{Is,Js,Ie,Je}$ dont les **indices ' Is,Js ' sont identiques** sont défléchis suivant des **directions parallèles** par construction (les cascades d'éléments ED$^{1E}{}_{Ie,Je}$ , ED$^{2E}{}_{Ie,Je}$... ED$^{NE}{}_{Ie,Je}$ sont toutes identiques et donnent donc des matrices de faisceaux défléchis identiques). Ils doivent pouvoir converger vers le même élément ED$^{1S}{}_{Is,Js}$ du premier moyen de déflexion MD$^{1S}$ du sous-système de sortie MAPA$^S$. Cette fonctionnalité peut être réalisée par un moyen optique de focalisation MOF désigné par **55** sur la figure 6a.

Ce moyen optique **55** peut être constitué de **une ou plusieurs lentilles** ou **d'un ou de plusieurs miroirs** (par exemple paraboliques). Il focalise **l'ensemble** des faisceaux optiques FD$^E{}_{Is,Js,Ie,Je}$ potentiellement défléchis (par les éléments du dernier moyen de déflexion MD$^{NE}$ (**15**)du sous-système de déflexion d'entrée MAPA$^E$) avec une déflexion angulaire $\theta^E{}_{Is,Js,Ie,Je}$ de mêmes indices Is,Js vers le même élément ED$^{1S}{}_{Is,Js}$ du premier moyen de déflexion MD$^{1S}$, **16**,du sous-système de déflexion de sortie MAPA$^S$ si celui-ci est **situé dans son plan focal image 52.**

L'ensemble des faisceaux optiques focalisés par le moyen optique **55** et correspondant aux différents faisceaux défléchis FD$^E{}_{Is,Js,Ie,Je}$ sera désigné par FDF$^S{}_{Is,Js,Ie,Je}$.

La **focale F$_{ML}$ du moyen optique du module MOLI** est calculée de telle façon que le point de convergence des différents faisceaux défléchis et focalisés FDF$^S{}_{Is,Js,Ie,Je}$ de même indice Is,Js coïncide avec le centre de l'élément ED$^{1S}{}_{Is,Js}$ comme le montre schématiquement les figures 6a et 6b.

En général les moyens de déflexion mis en jeu dans les deux sous-systèmes de déflexion d'entrée et de sortie seront identiques et génèreront des positions angulaires identiques ; il est donc nécessaire que le module de liaison préserve cette symétrie et en particulier que les angles $\theta^S{}_{Is,Js,Ie,Je}$ des faisceaux optiques focalisés FDF$^S{}_{Is,Js,Ie,Je}$ sur les éléments ED$^{1S}{}_{Is,Js}$ du moyens de déflexion MD$^{1S}$ prennent une gamme de valeurs identiques à celle des angles $\theta^E{}_{Is,Js,Ie,Je}$ des faisceaux correspondants FD$^E{}_{Is,Js,Ie,Je}$ en sortie des éléments ED$^{NE}{}_{Ie,Je}$ du moyen de déflexion MD$^{Ne}$.

Cette condition est réalisée si le moyen de déflexion MD$^{NE}$ , **15,** est placé dans le **plan focal objet 51** du moyen optique de focalisation **55** comme le montre la figure 6a.

Comme évoqué plus haut, plusieurs adaptations particulières du module MOLI doivent ou peuvent être mis en oeuvre pour prendre en compte la configuration en général repliée du système ou des valeurs particulières des paramètres de fonctionnement comme la valeur de l'écart angulaire entre les différentes positions de déflexion données par le sous-système MAPA$^E$ .

La figure 6c illustre la situation d'un système 'replié' dont les différents moyens optiques sont inclinés d'un angle $\varphi \neq 0$ par rapport à l'axe optique et ou, pour conserver la symétrie recherchée, le moyen optique MOF est incliné par rapport à l'axe optique du même angle $\varphi$( choisi à 45° sur la figure) .

Sur les figures 6a et 6c de configuration planaire le nombre d'éléments ED$^{NE}$ et ED$^{1S}$ mis en jeu ainsi que le nombre de positions de déflexion angulaire $\theta^E$ et $\theta^S$ attachées à chacun de ces éléments ont été choisis égaux à 4 par simplification ; les derniers moyens de déflexion du module MAPAd'entrée et les premiers moyens de déflexion du module MAPA de sortie sont désignés par 15 et 16 et localisés respectivement dans les plans focaux objet et image **51** et **52** . Les 4 valeurs angulaires des positions de déflexion en entrée et en sortie du module de liaison **50** attachées à chacun des éléments ED$^{NE}$ et ED$^{1S}$ sont désignées en indiçage simplifié respectivement par $\theta^E{}_{11}$, $\theta^E{}_{21}$, $\theta^E{}_{31}$, $\theta^E{}_{41}$et $\theta^S{}_{11}$, $\theta^S{}_{12}$, $\theta^S{}_{13}$, $\theta^S{}_{14}$ pour les éléments ED$^{NE}{}_1$et ED$^{1S}{}_1$, $\theta^E{}_{12}$, $\theta^E{}_{22}$, $\theta^E{}_{32}$, $\theta^E{}_{42}$et $\theta^S{}_{21}$, $\theta^S{}_{22}$, $\theta^S{}_{23}$, $\theta^S{}_{24}$ pour les éléments ED$^{NE}{}_2$et ED$^{1S}{}_2$, ...$\theta^E{}_{14}$ , $\theta^E{}_{24}$ , $\theta^E{}_{34}$ , $\theta^E{}_{44}$ et $\theta^S{}_{41}$, $\theta^S{}_{42}$, $\theta^S{}_{43}$, $\theta^S{}_{44}$ pour les éléments ED$^{NE}{}_4$et ED$^{1S}{}_4$ . Sur les figures 6a et 6c seules sont repérées les valeurs angulaires $\theta^E{}_{14}$, $\theta^E{}_{24}$, $\theta^E{}_{34}$ , $\theta^E{}_{44}$ et $\theta^S{}_{41}$, $\theta^S{}_{42}$, $\theta^S{}_{43}$ , $\theta^S{}_{44}$ des positions de déflexion attachées au éléments respectifs ED$^{NE}{}_4$et ED$^{1S}{}_4$ afin de ne pas surcharger l'illustration .

Bien évidemment , toutes les valeurs $\theta^E$ et $\theta^S$ sont telles que tous les $\theta^E{}_{IJ}$ de même indice I et que tous les valeurs$\theta^S{}_{IJ}$ de même indice J sont égales du fait des positions des éléments ED$^{NE}$ et ED$^{1S}$ respectivement dans les plans focaux objet **51** et **52** et image du moyen optique de focalisation **55.**

La position des centres des éléments ED$^{NE}{}_{Ie,Je}$ et ED$^{1S}{}_{Is,Js}$ des moyens de déflexion respectifs MD$^{NE}$ et

$MD^{1S}$ est entièrement définie par la valeurs des angles de déflexion angulaire $\theta^E_{Is,Js,Ie,Je}$

Dans le plan de la figure , une relation mathématique simple permet de calculer ces positions définies par les distances respectives $d^{NE}_{Ie,Je}$ et $d^{1S}_{Is,Js}$ (plus simplement indicés $d_{1e}$, $d_{2e}$, $d_{3e}$, $d_{4e}$ et $d_{1s}$, $d_{2s}$, $d_{3s}$, $d_{4s}$ sur les figures 6a et 6c) aux centres $O^{NE}$ et $O^{1S}$ (désignés simplement par $O_e$ et $O_s$ sur les mêmes figures) des moyens de déflexion $MD^{NE}$ et $MD^{1S}$ en fonctions des angles $\varphi$ et $\theta^E_{Is,Js,Ie,Je}$ (définis algébriquement par rapport à la direction de l'axe optique du système) :

$$d^{NE}_{Ie,Je} = F_{ML} * tg\,\theta^E_{Is,Js,Ie,Je} / (\cos\varphi + \sin\varphi * tg\,\theta^E_{Is,Js,Ie,Je})$$

$$d^{1S}_{Is,Js} = F_{ML} * tg\,\theta^E_{Is,Js,Ie,Je} / (\cos\varphi - \sin\varphi * tg\,\theta^E_{Is,Js,Ie,Je})$$

On remarque que les distances $d^{NE}_{Ie,Je}$ et $d^{1S}_{Is,Js}$ conduisent à des écarts non constants entre les positions des centres $O^{NE}_{Ie,Je}$ et $O^{1S}_{Is,Js}$ des éléments $ED^{NE}_{Ie,Je}$ et $E^{1S}_{Is,Js}$ et ceci même dans le cas ou $\varphi$ = 0. Cette situation est bien entendu la même pour l'ensemble des moyens optiques d'entrée et de sortie mis en jeu dans le système (moyens de déflexion et moyens de conjugaison associés, moyens de mise en forme, fibres optiques...) et qui sont positionnés respectivement par rapport aux moyens de déflexion $MD^{NE}$ et $MD^{1S}$ par translation parallèlement à l'axe optique du système.

Notons aussi qu'il y a seulement retournement par rapport à l'axe optique du système entre les positions des éléments constitutifs des différents moyens optiques des sous-systèmes d'entrée et de sortie qui peuvent donc être de configurations identiques.

Deux points doivent maintenant être pris en compte pour l'obtention d'un système de routage techniquement réalisable : l'encombrement et les aberrations optiques.

L'application des formules mathématiques permettant de calculer $d^{NE}_{Ie,Je}$ et $d^{1S}_{Is,Js}$ montre que pour des valeurs typiques de l'ordre de quelques millimètres entre les positions des centres $O^{NE}$ et $O^{1S}$ et des écarts entre les positions de déflexion angulaire de l'ordre de $10^{-3}$ radians

(atteintes typiquement avec des miroirs uniaxes présentant deux positions de déflexion séparées de $8.10^{-3}$ radians et une cascades de par exemple 5 moyens de déflexion donnant 32 positions de déflexion angulaire disposées linéairement), la focale $F_{ML}$ nécessaire est supérieure au mètre !

Les solutions consistent soit à augmenter l'écart angulaire entre les positions de déflexion ce qui dans certain cas peut-être difficile (par exemple, cela peut conduire à des technologies de micro-miroirs plus complexes) soit à introduire des Moyens Optiques de Divergence MOD permettant d'augmenter la divergence des faisceaux en sortie $FDE_{Is,Js,Ie,Je}$ en sortie des éléments $ED^{NE}_{Ie,Je}$ du moyen de déflexion $MD^{NE}$ puis de diminuer de la même valeur la divergence des faisceaux $FDFS_{Is,Js,Ie,Je}$ focalisés sur les éléments $E^{1S}_{Is,Js}$ du moyen de déflexion $MD^{1S}$.

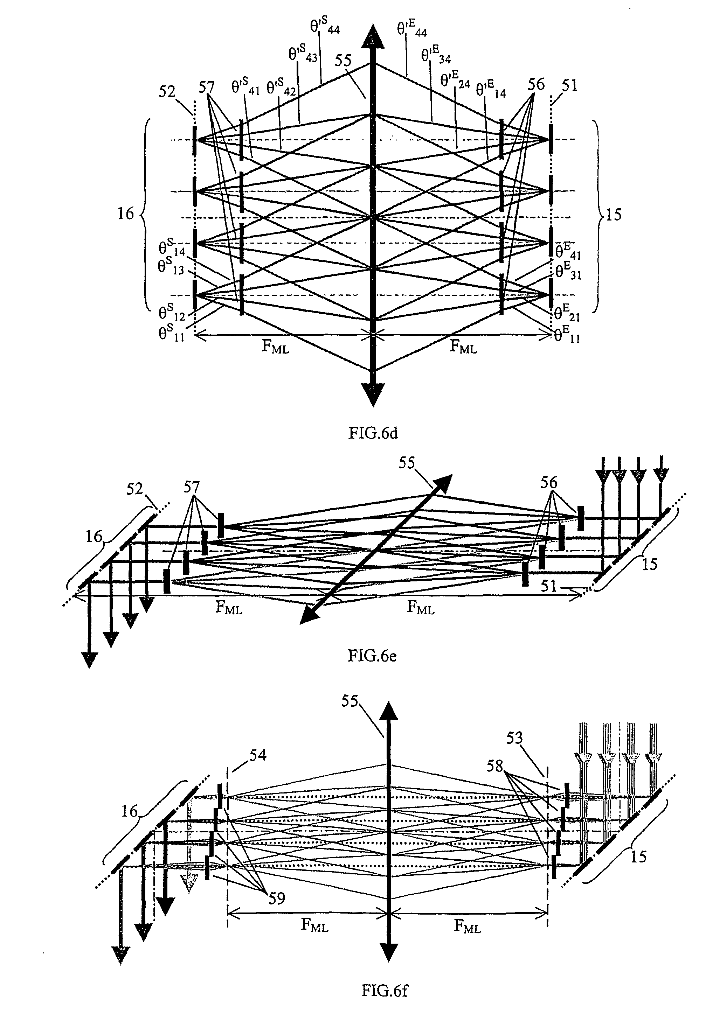

Cette configuration est présentée sur les figures 6d ($\varphi$ = 0) et 6e ($\varphi$ = 45°) déduites des figures 6a et 6c mais avec introduction des Moyens Optiques de Divergence **56** et **57**.

Ces moyens optiques de divergence MOD peuvent être des matrices d'éléments optiques réfractifs (microlentilles de courtes focales $f_{MOD}$ divergentes comme représenté sur la figure 6d ou convergentes) ou éventuellement réflectifs (micro-miroirs de courtes focales). Ils réalisent la conjugaison optique des différents éléments $ED^{NE}_{Ie,Je}$ avec un grossissement $G_{MOD}$ inférieur à 1 et donc un grandissement angulaire $1/G_{MOD}$ supérieur à 1. Les valeurs angulaires $\theta^E_{Is,Js,Ie,Je}$ deviennent $\theta'^E_{Is,Js,Ie,Je}$ et les valeurs angulaires $\theta^S_{Is,Js,Ie,Je}$ deviennent $\theta'^S_{Is,Js,Ie,Je}$ (voir figure 6d pour les détails et la figure 6e sur laquelle seules les différences amplifiées des valeurs angulaires $\theta'^E_{Is,Js,Ie,Je}$ et $\theta'^S_{Is,Js,Ie,Je}$ sont reproduites) .

Il est alors facile de voir que dans ce type de configuration la focale $F_{ML}$ est divisée par une valeur de l'ordre de $G_{MOD}$ .

Si $G_{MOD}$ est par exemple choisie égale à 10 , $F_{ML}$ ne sera plus, avec les mêmes paramètres que précédemment, que de l'ordre de la dizaine de centimètres.

Le problème des aberrations optiques reste cependant posé par l'inclinaison du moyen optique de focalisation MOF particulièrement dans le cas d'angles $\varphi$ élevés (par exemple 45° comme dans les illustrations des figures 6c et 6e) .

Il est possible de surmonter le problème grâce à la configuration de la figure 6f dans laquelle sont insérés des Moyens Optiques de Basculement Angulaire MOBA **58** qui réalisent l'image des différents éléments $ED^{NE}_{Ie,Je}$ dans un plan PFO **53** perpendiculaire à l'axe optique du système avec un **grossissement $G_{MOBA}$ constant.**

Cette configuration peut par exemple s'obtenir avec des modules MOBA composés d'éléments de conjugaison optique (en général micro-lentilles convergentes ou divergentes ou micro-miroirs en configuration similaire à celle des éléments des autres sous-systèmes) qui possèdent chacun une focale $f_{MOBA\ Ie,Je}$ , adaptée à la réalisation de la configuration souhaitée et dont la valeur est telle que :

$$f_{MOBA\ Ie,Je} = D_{Ie,Je} * (G_{MOBA}/ (G_{MOBA} + 1)^2)$$

ou $D_{Ie,Je}$ est la distance entre l'élément $ED^{NE}_{Ie,Je}$ du moyen de déflexion $MD^{NE}$ et le plan PFO **53** confondu avec le plan focal objet 51du moyen optique de focalisation MOF .

Les distances $D'_{Ie,Je}$ et $D''_{Ie,Je}$ séparant chaque élément de conjugaison du module MOBA **58** respectivement de l'élément de déflexion correspondant $ED^{NE}_{Ie,Je}$ et du plan PFO sont égales à :

$$D'_{Ie,Je} = D_{Ie,Je}*G_{MOBA}/(G_{MOBA} + 1)$$

$$D''_{Ie,Je} = D_{Ie,Je}*1/(G_{MOBA} + 1)$$

Sur la figure 6f, les différents éléments **58** du module MOBA sont des micro-lentilles convergentes.

Un module MOBA similaire (composé des éléments **59** similaires aux éléments **58**) mais retourné par rapport à l'axe optique du système sera aussi introduit pour réaliser la conjugaison du plan PFI **54**, confondu avec le plan focal image **52** du moyen optique de focalisation MOF, avec les différents éléments $E^{1S}_{Is,Js}$ du moyen de déflexion $MD^{1S}$ comme le montre la figure 6f .

Il est bien sûr clair qu'en choisissant le grossissement $G_{MOBA}$ inférieur à 1 les problèmes d'encombrement et d'aberrations optiques du module MOLI de liaison sont résolus simultanément puisque le moyen de focalisation travaille perpendiculairement à l'axe optique du système et que l'angle de divergence des faisceaux $FD^{E}_{Is,Js,Ie,Je}$ est multiplié par la valeur $1/G_{MOBA}$ supérieure à 1.

• <u>**sous-système de sortie de déflexion et de réorientation des faisceaux optiques:**</u>

Ce sous-système désigné par **35** sur la figure 2 est non représenté en détail car il est similaire au sous-système de déflexion d'entrée dont la figure 4 donne un exemple de représentation. Il utilise un module de sortie $MAPA^{S}$ mettant en jeu comme pour le module $MAPA^{E}$ une cascade d'au moins N moyens de déflexion $MD^{1S}$, $MD^{2S}$,... $MD^{IS}$,... $MD^{NS}$ telle que deux moyens consécutifs $MD^{I+1S}$ et $MD^{IS}$ soient conjugués optiquement par le moyen de conjugaison optique $MCO^{IS}$ avec le grossissement $G_{I+1,I}$ .

Ce sous-système a pour objectif de redresser les rayons $FDF^{S}_{Is,Js,Ie,Je}$ incidents sur les éléments $ED^{1S}_{Is,Js}$ du moyen de déflexion $MD^{1S}$ afin de les rendre à nouveau parallèles à l'axe optique du système .

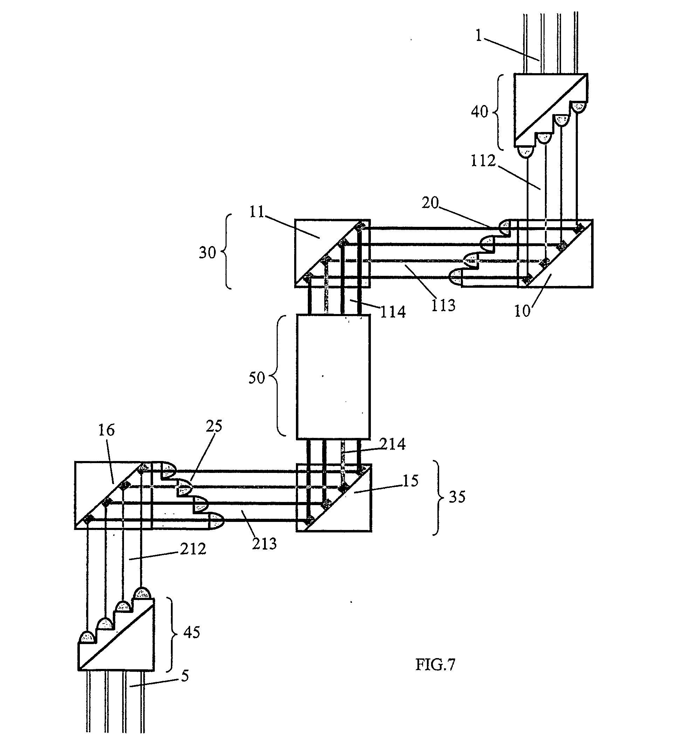

Il doit donc pouvoir, grâce à la cascade de moyens de déflexion $MD^{1S}$, $MD^{2S}$... $MD^{NS}$ , ramener à la valeur nulle l'ensemble des valeurs de déflexion angulaires $\theta^{S}_{Is,Js,Ie,Je}$ que peuvent prendre les différents rayons focalisés $FDF^{S}_{Is,Js,Ie,Je}$ . Ce redressement angulaire est symbolisé sur la figure 7 par l'épaisseur de plus en plus faible du trait des différentes familles de rayons **214, 213, 212**.

Le module $MAPA^{S}$ met en jeu le même nombre N de moyens de déflexion $MD^{IS}$ que le module MAPA d'entrée $MAPA^{E}$ afin de posséder le même nombre $N'_{S} * N''_{S}$ de positions de déflexion angulaires que celui-ci et pouvoir redresser tous les rayons potentiels $FDF^{S}_{Is,Js,Ie,Je}$ grâce à un adressage convenable de chacun des éléments des différents moyens de déflexion $MD^{1S}$, $MD^{2S}$... $MD^{NS}$ .

Chacun des moyens de déflexion $MD^{1S}$, $MD^{2S}$,... $MD^{NS}$, du module $MAPA^{S}$ possédera $N'_{S} * N''_{S}$ éléments de déflexion $ED^{1S}_{Is,Js}$ , $ED^{2S}_{Is,Js}$,... $ED^{NS}_{Is,Js}$ . Le nombre $N'_{S} * N''_{S}$ pourra être supérieur mais le plus souvent égal au nombre $N'_{E} * N''_{E}$ des éléments de déflexion $ED^{1E}_{Ie,Je}$ , $ED^{2E}_{Ie,Je}$ ,... $ED^{NE}_{Ie,Je}$ des moyens de déflexion de la cascade d'entrée $MD^{1E}$ , $MD^{2E}$ ,... $MD^{NE}$

(voir remarque dans ce même paragraphe).

En sortie des éléments de déflexion $ED^{NS}_{Is,Js}$ du dernier moyen de déflexion $MD^{NS}$ du module $MAPA^{S}$ , il y a donc $N'_{S} * N''_{S}$ faisceaux optiques de sortie redressés $FS_{Is,Js}$ qui peuvent provenir de l'un quelconque des $N'_{E} * N''_{E} * N'_{S} * N''_{S}$ faisceaux optiques $FD^{E}_{Is,Js,Ie,Je}$ pouvant être potentiellement générés par le module $MAPA^{E}$ et focalisés par le module de liaison MOLI suivant les $N'_{E} * N''_{E} * N'_{S} * N''_{S}$ faisceaux $FDF^{S}_{Is,Js,Ie,Je}$ .

• <u>**sous-système de sortie de mise en forme des faisceaux optiques**</u>

Ce sous-système désigné par **45** sur la figure 2 permet la mise en forme des $N'_{S}*N''_{S}$ faisceaux optiques de sortie $FS_{Is,Js}$ redressés angulairement par le module de sortie $MAPA^{S}$ et donc rendus tous à nouveaux parallèles à l'axe optique du système. Il est similaire au sous-système de mise en forme des faisceaux optiques d'entrée **35** représenté en détail figures 4a et 4b.

Il sera désigné par l'abréviation $MIFO^{S}$ (pour module de Mise en FOrme de sortie).

Il comportera N'$_S$ * N"$_S$ éléments optiques de focalisation MF$^S_{ls,Js}$ réfractifs (micro-lentilles) ou réflectifs (micro-miroirs) disposés dans la même configuration géométrique que les autres éléments du système de routage et focalisera chacun des N'$_S$ * N"$_S$ faisceaux optiques FS$_{ls,Js}$ ,212 , redressés en sortie des éléments ED$^{NS}_{ls,Js}$ du dernier moyen de déflexion MD$^{NS}$ du module de sortie MAPA$^S$ dans chacune des fibres optiques correspondantes de sortie FO$^S_{ls,Js}$ .

La focale f$_{MFS}$ des éléments optiques de mise en forme de sortie est calculée de façon à transformer chacun des faisceaux optiques FD$^S_{ls,Js,le,Je}$, restés gaussiens au cours des différentes conjugaisons réalisées, en un faisceau toujours gaussien mais dont le 'waist' $\omega_{FOS}$ se trouve à nouveau adapté à celui des fibres optiques de sortie FO$^S_{ls,Js}$ .

Le plus souvent les fibres optiques de sortie FO$^S_{ls,Js}$ seront identiques aux fibres optiques d'entrée FO$^E_{le,Je}$ avec en particulier un mode gaussien de 'waist' $\omega_{FOS}$ identique au 'waist'$\omega_{FOE}$ des fibres optiques d'entrée . Comme le module de déflexion d'entrée MAPA$^E$ comporte le même nombre de conjugaisons optiques que le module de déflexion de sortie MAPA$^S$ mais avec un grossissement totale inverse **1/G$_T$** (**G$_T$** = $\Pi_1 \rightarrow _{N-1}$ G$_{l+1,l}$ ), le 'waist' $\omega_{FIS}$ des N'$_S$ * N"$_S$ faisceaux optiques FS$_{ls,Js}$ sera égal au 'waist' $\omega_{FIE}$ des faisceaux incidents FI$^E_{le,Je}$ et la focale **f$_{MFS}$** des éléments de mise en forme du module MIFO$^S$ sera en général identique à celle **f$_{MFE}$** des éléments de mise en forme du module MIFO$^E$ d'entrée.

La figure 7 donne un exemple de réalisation possible d'un routeur point à point utilisant des modules MAPA composés d'une cascade de 2 moyens de déflexion à 4 éléments chacun.

## 4.2 routeur diviseur de puissance

Il s'agit dans ce type de routeur de partager la puissance (et par conséquent l'ensemble des informations des différents canaux) transportée par les N$_E$ fibres d'entrée et de réorienter chacune des différentes fractions ainsi créée vers une fibre de sortie . Le partage peut être réaliser en partageant la puissance transportée par chaque fibre d'entrée en K parties égales cas le plus courant) ou non.

Ce type de routeur est illustré schématiquement figure3b. Il ne diffère du précédent que par l'addition en sortie de chaque fibre d'entrée d'un composant diviseur de puissance **60** qui partage la puissance lumineuse et donc l'ensemble des informations transportées par chaque fibre d'entrée en K parties le plus souvent égales . La figure 3b montre un tel dispositif dans le cas où le nombre N$_E$ de fibres.. d'entrée est égal à 4 et le facteur K égal aussi à 4 générant ainsi 16 faisceaux distincts qui pourront être alors dirigés vers n'importe laquelle des fibres de sortie (au moins 16) par un routeur point à point identique au précédent.

Plus généralement , il faudra au moins K * N$_E$ fibres de sortie pour que toutes les faisceaux optiques d'entrée générés FI$_{le,Je}$ ( le variant de 1 à N$_E$ et Je de 1 à K) puisse trouver une fibre d'accueil en sortie.

En toute rigueur le partage de puissance des fibres d'entrée peut ne pas se faire avec le même facteur K mais avec des facteurs K$_{le}$ différents pour chaque fibres d'entrée FO$_{le}$ ; dans ce cas , il faudra disposer d'au moins $_1$$_{Ne}$ K$_{le}$ fibres de sortie.Dans la suite de la présentation et sans que cela nuise à la généralité de l'invention nous supposerons que K est identique pour toutes les fibres d'entrée.

Notons aussi que dans ce type de diviseur , la division de puissance est réalisée quelle que soit la longueur d'onde véhiculée par la fibre comme schématisé sur la figure 3b par des traits multicolores symbolisant les différents faisceaux optiques générés.

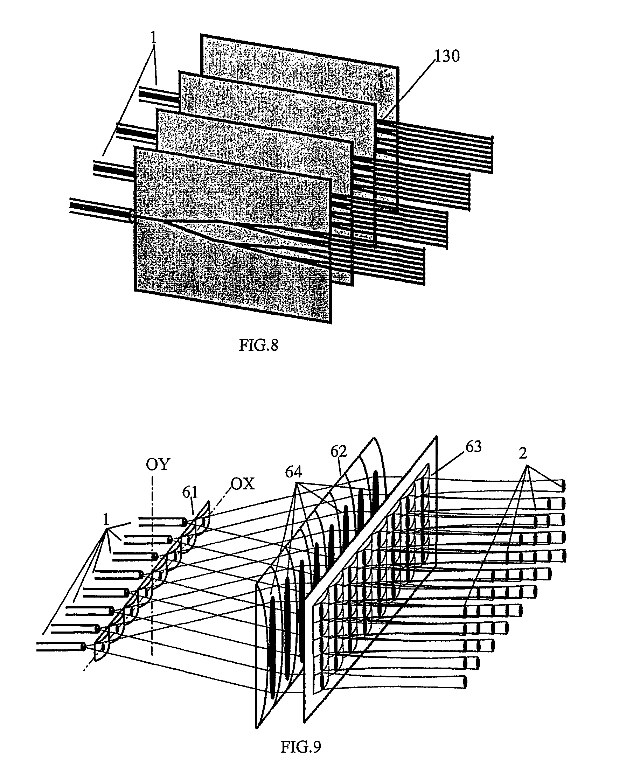

Le diviseur de faisceaux peut être de différente nature et mettre en jeu soit les techniques de l' optique intégrée avec des diviseurs **130** constitués par l'association de guides de lumière et de jonctions Y sur une puce (diviseurs 1$\rightarrow$8 , 1$\rightarrow$16 , 1$\rightarrow$32...commercialement disponibles) comme le montre la figure 8 soit celles des fibres optiques (diviseurs disponibles avec de faibles facteurs de division K) ou encore celles de l'optique espace libre.

Dans les deux premiers cas les diviseurs de puissance seront en général connectés directement aux fibres optiques d'entrée et la configuration d'entrée sera identique à celle du routeur précédent en remplaçant simplement le nombre de faisceaux FI$_{le,Je}$ à réorienter par K * N$_E$ au lieu de N$_E$; la mise en forme des faisceaux FI$_{le,Je}$ se faisant après les diviseurs de façon identique.

Dans le cas d'un module diviseur **60** réalisé en optique espace libre la division de puissance lumineuse et la mise en forme des faisceaux peut être réalisée par le même module comme par exemple le module représenté figure 9 et qui comprend :

- une première barrette **61** de lentilles cylindriques ou sphéro-cylindriques permettant à la fois de collimater chacun des N$_E$ faisceaux issus de la barrette des N$_E$ fibres d'entrée **1** dans la direction de l'axe OX de cette barrette et favorablement d'augmenter leur ouverture angulaire $\Delta\beta$ suivant les plans perpendiculaires à OX afin de former N$_E$ faisceaux optiques de forme dissymétrique **64** comme le montre la figure 9,
- une seconde barrette **62** de lentilles cylindriques ou sphéro-cylindriques permettant de collimater les N$_E$ faisceaux optiques dissymétriques obtenus,
- une matrice **63** de micro-lentilles ou de micro-miroirs sphériques permettant de former les K * N$_E$ faisceaux optiques parallèles **112** d'entrée $FI_{Ie,Je}$ (le variant de 1 à $N_E$ , Je de 1 à K) avec l'ouverture angulaire et la répartition spatiale souhaitées.

Les focales des différents éléments du module diviseur ainsi formés seront choisies en fonction du nombre K , de l'espacement géométrique désirés pour les K * $N_E$ faisceaux optiques d'entrée et de l'encombrement disponible.

Le dessin de la figure 9 met en jeu une barrette de fibres d'entrée 1 pour des raison de simplification de présentation. Il est clair qu'il est possible d'utiliser des configurations de fibres optiques d'entrée en matrices à condition de prendre en compte dans le dimensionnement des éléments de cette matrice et la place que va occuper dans le système de routage les K faisceaux générés par le module diviseur. En tout état de cause, cette matrice sera toujours très dissymétrique avec des espacements. moyens entre fibres environ K fois plus grand dans une direction que dans l'autre ; dans le cas du module diviseur de la figure 9 on aura par exemple des espacements moyens suivant la direction OY environ K fois ceux représentés suivant la direction OX. Il est bien sûr possible d'imaginer une configuration dans lesquels les géométries de la matrice entre les directions OX et OY seraient échangées.

## 4.3 routeur démultiplexeur de longueurs d'ondes

Ce type de routeur se déduit du routeur précédent par simple remplacement du module diviseur de puissance par un module démultiplexeur de longueurs d'ondes **70** comme représenté sur la figure 3c.

Si chacune des $N_E$ fibres optiques d'entrée transportent L longueurs d'ondes différentes $\lambda_1$ , $\lambda_2$ ... $\lambda_L$ , le module démultiplexeur générera pour chacune des fibres d'entrée L faisceaux optiques et le problème sera donc ramener à celui du routeur point à point du paragraphe 4.1 avec un nombre de faisceaux $FI_{Ie,Je}$ à gérer égal à L * $N_E$ (le variant de 1 à L et Je de 1 à $N_E$ ).

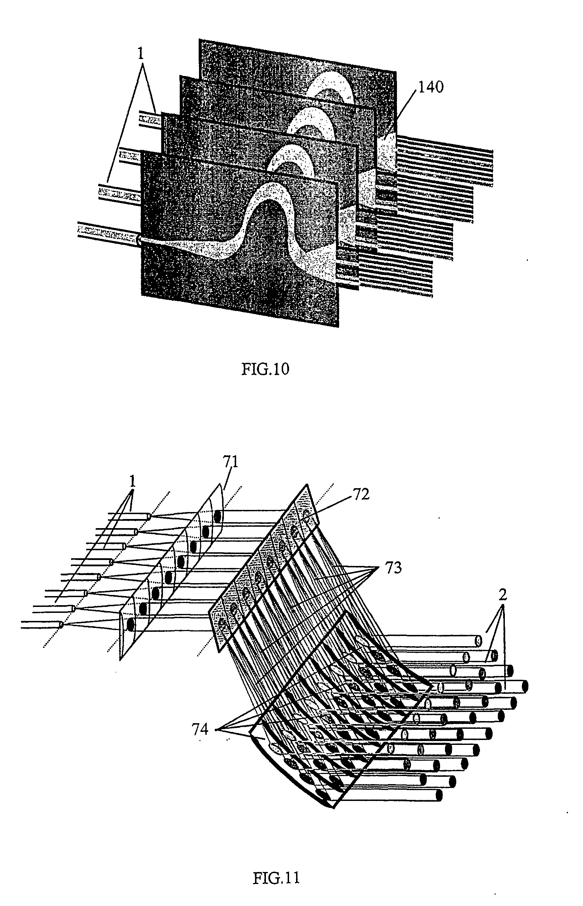

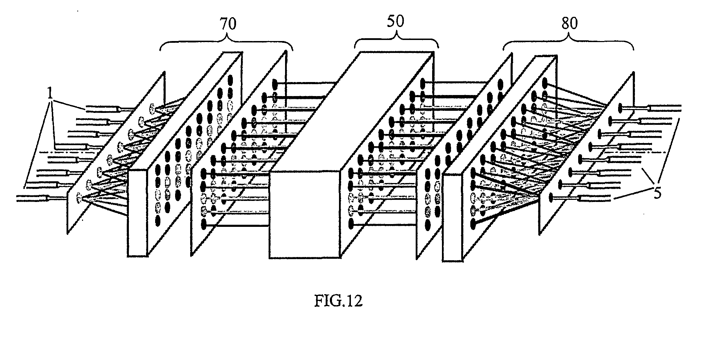

Comme dans le cas du routeur diviseur de puissance, le module démultiplexeur peut être soit réalisé en optique intégrée 140 comme le montre la figure 10 avec des composants commercialisés de type AWG ('Array Waveguides Gratings') pouvant être directement connectés aux fibres d'entrée; le sous-système de mise en forme des L * $N_E$ faisceaux optiques générés étant placé après le module démultiplexeur et similaire à celui décrit paragraphe 4.1, soit réaliser en optique espace libre comme le montre la figure 11 dans une configuration d'exemple.

Sur cette figure 11, le démultiplexage des longueurs d'ondes est obtenu par un réseau de diffraction 72 dont les traits sont parallèles à l'axe OX de la barrette de fibres d'entrée. Après mise en forme adaptée en terme d'ouverture angulaire par une barrette de micro-lentilles de collimation 71 (en général sphériques), chaque longueur d'onde $\lambda_1$, $\lambda_2$ ... $\lambda_L$, transportée par chacune des fibres d'entrée est diffractée suivant un angle $\omega_1$, $\omega_2$ ... $\omega_L$.

En sortie du réseaux de diffraction dont le pas est adapté à l'écart $\Delta\lambda$ (en général constant entre les différentes longueurs d'ondes à séparer) il y a donc $N_E$ familles de L faisceaux optiques **73** séparés angulairement et de longueurs d'ondes différentes. Ces faisceaux doivent être réorientés suivant la même direction (direction de l'axe optique du routeur) grâce par exemple à la barrette de miroirs paraboliques **74**.

En sortie du module démultiplexeur, il y a donc génération comme souhaité de L * $N_E$ faisceaux parallèles **2** pouvant être indicés $FI_{Ie,Je}$(le variant de1 à L et Je de 1 à $N_E$).

Une matrice de L * $N_E$ éléments de conjugaison (non représentée sur la figure 9) peut éventuellement être insérée entre la barrette de miroirs **74** et le sous-système de déflexion d'entrée pour adapter l'ouverture angulaire des faisceaux optiques aux paramètres du routeur.

Notons que dans la matrice de faisceaux incidents ainsi formée, chaque faisceau appartenant à une même ligne d'indice le possède la même longueur d'onde qui pourra donc être indicé par $\lambda_{Ie}$ (le variant de 1 à L et $\lambda_{Ie}$ prenant donc les valeurs $\lambda_1$ , $\lambda_2$ ... $\lambda_L$) .

Comme au paragraphe précédent les fibres d'entrée disposées en barrettes sur la figure 11 par raisons de simplification peuvent être configurées en matrices avec les mêmes contraintes déjà signalées. De même qu'il est bien sûr toujours possible d'échanger dans l'invention le rôle des lignes et des colonnes dans les matrices considérées .

## 4.4 routeur démultiplexeur-multiplexeur de longueurs d'ondes

Ce type de routeur correspond à la représentation schématique planaire de la figure 3d et matricielle de la figure 12.

En entrée, il possède une configuration identique au routeur démultiplexeur mais chacun des $N_E$ canaux d'information de même longueur d'onde $\lambda_{Ie}$ transporté par une fibre d'entrée quelconque $FO_{Je}$ de la barrette de fibres d'entrée **1** est mélangé et réorienté par le routeur puis remultiplexé vers une fibre de sortie **5** quelconque. A la différence du routeur démultiplexeur précédent chaque fibre de sortie reçoit non pas un seul canal d'information mais L canaux issus de n'importe quelle fibre d'entrée, chacun attaché à une longueur d'onde $\lambda_{Ie}$ distincte.

Le routeur précédent nécessitait au moins L * $N_E$ fibres de sortie alors que le routeur démultiplexeur-multiplexeur ne nécessite plus qu'au moins $N_S = N_E$ fibres de sortie.

Le fonctionnement de ce routeur sera mieux compris sur le schéma de la figure 1d dans lequel chacun des canaux d'information injecté dans les différentes fibres de sortie est distingué par sa longueur d'onde $\lambda_{le}$ d'entrée (couleur des différents rayons lumineux) et par sa fibre d'entrée d'origine (ronds de couleurs différentes) . Pour obtenir cette fonctionnalité il convient d'utiliser la succession des sous-systèmes suivants:

- un module démultiplexeur **70** tel que décrit précédemment et générant, pour une barrette de $N_E$ fibres d'entrée transportant chacune L longueurs d'ondes, une matrice de L * $N_E$ faisceaux optiques parallèles à l'axe optique du système $FI_{le,Je}$ (oir la figure 12). Dans cette matrice, l'indice colonne Je représente le numéro de la fibre d'entrée génératrice du faisceau (Je varie de 1 à $N_E$) et l'indice ligne le représente la longueur d'onde $\lambda_{le}$ transportée (le varie de 1 à L)
- un routeur point à point permettant d'échanger de manière quelconque l'ensemble des faisceaux $FI_{le,Je}$ d'une **même ligne 'le'** de la matrice ainsi formée, c'est à dire d'échanger l'ensemble des $N_E$ faisceaux de même longueur d'onde $\lambda_{le}$ de cette ligne. Cette opération peut être réalisée à partir d'un routeur point à point utilisant des sous systèmes de déflexion d'entrée et de sortie mettant chacun en jeu un module MAPA (décrit dans l'invention précédente) à **déflexion linéaire** (c'est à dire dont les faisceaux sont défléchis suivant un plan parallèle à la direction définie par les lignes de la matrice des faisceaux optiques incidents $FI_{le,Je}$ et l'axe optique du système) et un module de liaison MOLI similaire à celui décrit en détail au paragraphe 4.1 .
  Le routeur point à point proposé permet donc le brassage de tous les faisceaux optiques de même longueur d'onde mais ne doit pas permettre d'échange entre les lignes comme le montre la figure 12 de façon à ce qu'un multiplexeur **80** similaire au démultiplexeur d'entrée puisse rassembler chacun des L canaux d'une colonne quelconque Js de la matrice des faisceaux optiques de sortie (chaque canal transportant ses informations sur une porteuse lumineuse de longueurs d'ondes $\lambda_1$ , $\lambda_2$ ... $\lambda_L$ ) dans la fibre de sortie correspondante $FO_{Js}$.
- un module multiplexeur de sortie **80** similaire au module démultiplexeur d'entrée **70** et qui permet donc de rassembler chacun des L faisceaux optiques d'une colonne d'indice Js vers la fibre de sortie correspondante $FI_{Js}$.

### 4.5 routeur démultiplexeur-multiplexeur généralisé

Le routeur démultiplexeur-multiplexeur précédent peut être généralisé afin de permettre la réalisation de toutes les configurations de routage entre le cas illustré sur la figure 3c où chaque canal de longueur d'onde $\lambda_{le}$ et provenant de la fibre d'entrée $FO_{Je}$ est orienté vers une fibre de sortie distincte (routeur démultiplexeur) et le cas illustré sur les figures 3d et 12 où chacune des fibres de sortie reçoit L canaux de longueur d'onde distincte.

Le nombre minimum de fibres de sortie $N_{Smin}$ requis pour le bon fonctionnement du routeur pour lequel à chaque canal d'entrée correspond au moins une fibre de sortie est $N_{Smin} = L * N_E$ dans la configuration de la figure 1c (routeur démultiplexeur) et $N_{Smin} = N_E$ dans celle de la figure 3d et 12 (routeur démultiplexeur-muktiplexeur).

Il peut dans certaines configurations de réseaux de communication être intéressant de pouvoir avoir accès à des configurations intermédiaires où par exemple seulement L' des L longueurs d'ondes transportées par chacune des fibres d'entrée puisent être prélevées et orientées vers des fibres de sortie distinctes , les L - L' longueurs d'ondes restantes étant orientées pour chacune des fibres d'entrée vers une seule fibre de sortie . Dans cette situation le nombre minimum de fibres de sortie nécessaire sera $N_{Smin} = (L'+1) * N_E$ : si L'= 1 (une longueur d'onde prélevée par fibre d'entrée) il faudra au moins 2 * $N_E$ fibres de sortie.

Toutes ces configurations que l'on peut désignées sous le nom de 'Add and Drop' généralisé sont réalisables à partir du routeur démultiplexeur-multiplexeur du paragraphe 4.4.

Il suffit pour cela d'utiliser un sous-système de routage point à point identique à celui décrit au paragraphe 4.4 mais permettant le routage des $N_E$ faisceaux d'entrée composant chacune des lignes non plus vers au moins $N_S$ = $N_E$ faisceaux de sortie par lignes mais vers au moins $N_S$ = (L'+1) * $N_E$ : L' pouvant varier de 0 (cas du routeur démultiplexeur-multiplexeur sans redondance possible des figures 3d et 12 où $N_S$ = $N_E$) à L-1 (cas du routeur démultiplexeur sans redondance possible de la figure 3c où $N_S$ = L * $N_E$). Cela implique dans le cas le plus complexe que la cascade de moyens de déflexion des deux modules MAPA à déflexion linéaire mis en jeu dans le routeur point à point devra permettre de générer au moins L * $N_E$ positions de déflexion angulaires .

### 4.6 Contrôle de fonctionnement des différents routeurs

Comme dans l'invention décrite dans la demande de brevet du même jour concernant les modules MAPA , il est en général indispensable de pouvoir s'assurer en permanence du bon fonctionnement du système de routage et en particulier que les éléments actifs mis en jeu occupent bien les différentes positions programmées.

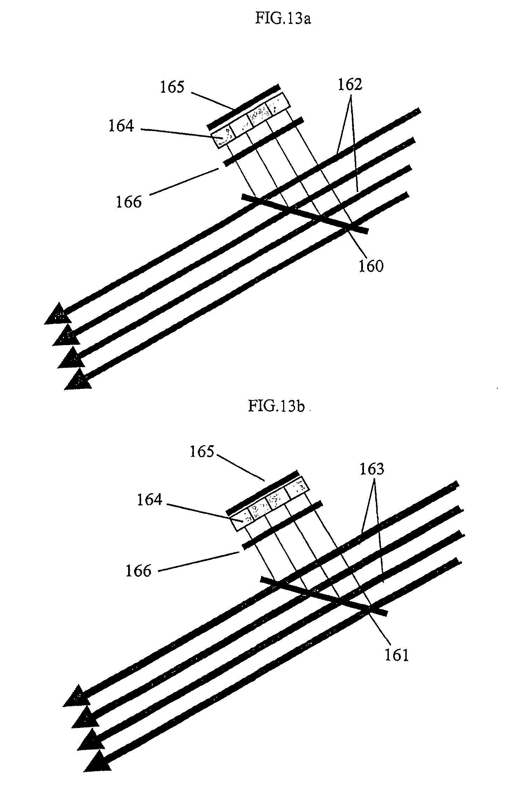

Ce contrôle peut être réalisé de façon similaire à celui décrit pour les modules MAPA par prélèvement à chaque étages des deux modules MAPA d'une partie de l'information représentative de l'état de configuration des positions de déflexion angulaire effectivement pris par rapport à l'état programmé. Ce prélèvement (voir figures 13a et 13b) peut se faire directement sur les faisceaux de signal **162** via des lames séparatrices adaptées **160** au prix de pertes globales plus élevées ou plus favorablement sur des faisceaux annexes **163** superposés aux faisceaux de signal via des lames séparatrices dichroïques **161.**

Le module de contrôle **90** pourra être comme dans la demande de brevet du même jour constitué des éléments suivants (figures 13a et 13b) :

- un module optique de projection **MOP, 164,** constitué par exemple d'une barrette ou d'une matrice de micro-lentilles ou de micro-miroirs adaptés permettant de transformer , pour chaque élément de déflexion à contrôler , les positions de déflexion angulaires générées en positions spatiales de façon biunivoque.
- Un détecteur de positions **165** favorablement placé au niveau ou au voisinage du plan focal des différents éléments du module MOP et dont l'ensemble des points de détection sont dans une configuration géométrique homothétique de la figure des positions de déflexion angulaire à contrôler. Ce détecteur de position pourra être par exemple une barrette ou une matrice de photodétecteur de type CMOS.
- Eventuellement un système optique de réduction d'image **166** éventuellement placé avant le module optique MOP pour adapter les dimensions des moyens de déflexion du module MAPA à celles du détecteur de position.

Bien entendu les éléments de contrôle pourront être placés à chaque étage des deux modules MAPA pour avoir un contrôle de tous les éléments de déflexion mis en jeu dans le routeur ou par exemple seulement en sortie de ces modules et n'avoir qu'un contrôle global de l'état du système. Ces moyens de contrôles décrits en détail dans la demande de brevet du même jour sont illustrés schématiquement sur les figures 13.

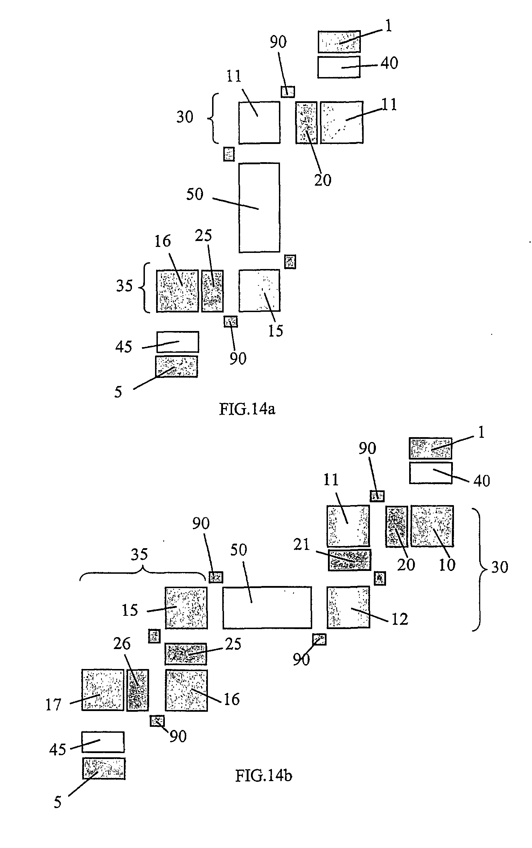

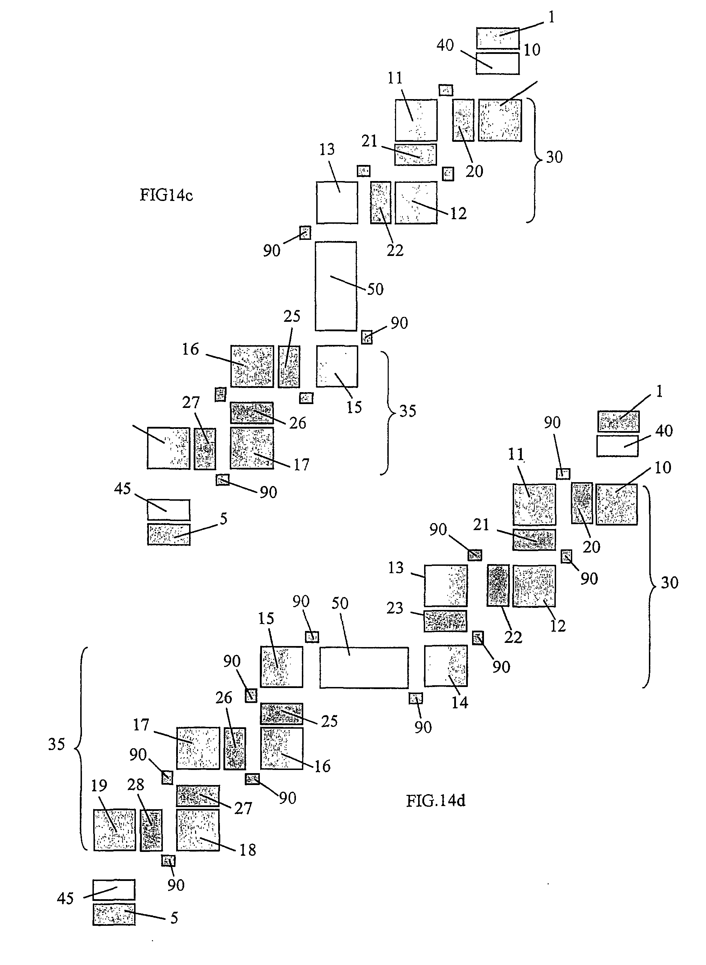

Les figures 14 donnent à titre des exemples de configurations possibles des routeurs de l'invention pour différentes complexités de modules MAPA.

La Fig.14a illustre un routeur mettant en jeu des modules MAPA avec une cascade de 2 moyens de déflexion. Sur cette figure, on a représenté schématiquement les éléments clé d'un routeur avec les fibres d'entrée **1** et de sortie **5,** les sous-systèmes de mise en forme d'entrée et de sortie **40** et **45** composés chacun d'un module MAPA à 2 moyens de déflexion **10** et **11** et **15** et **16** dont chaque élément correspondant est conjugué optiquement par les moyens de conjugaison **20** et **25 ,** les sous-systèmes de déflexion d'entrée et de sortie **30** et **35** et le module de liaison **50.**

Les autres figures 14b, 14c, 14d mettent en jeu respectivement des modules MAPA à 3, 4 et 5 moyens de déflexion (désignés par **10,11, 12, 13, 14...** en entrée et **15,16,17, 18, 19...** en sortie) et dont les éléments correspondants de 2 moyens de déflexion consécutifs sont conjugués optiquement par les moyens de conjugaison **20, 21, 22, 23...** en entrée et **25, 26, 27, 28...** en sortie.

Dans l'hypothèse de moyens de déflexion composés d'éléments miroirs 2 axes - 2 positions (voir demande de brevet du même jour) les différentes configurations des figures 14a, 14b, 14c, 14d permettent la réalisation de routeurs point à point de complexité croissante respectivement 16 entrées-16sorties, 64 entrées-64 sorties, 256 entrées-256 sorties, 1024 entrées-1024 sorties.

### 4 .7: Module de liaison : variante

Dans les configurations décrites jusqu' à présent, chaque élément des matrices de déflexion mis en jeu dans les différents modules correspond à une fibre d'entrée et les modules d'entrée et de sortie sont distincts.

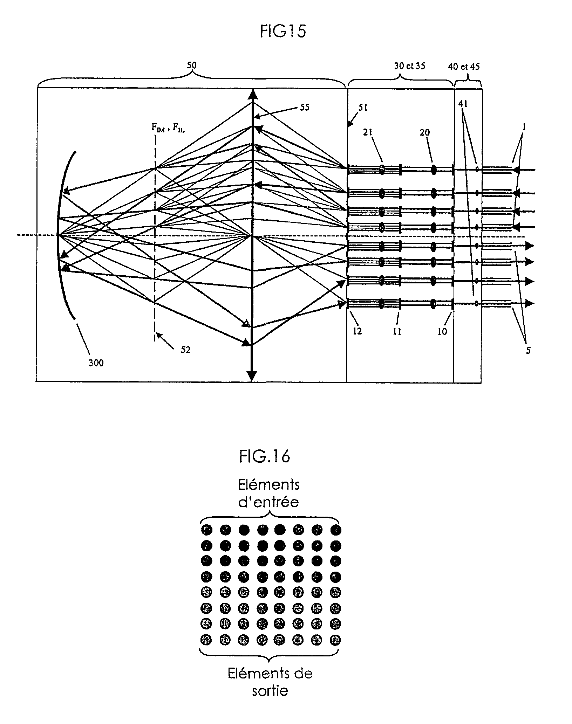

Il peut être intéressant d'utiliser les mêmes matrices d'éléments de déflexion (et par conséquent aussi les même matrices de micro-lentilles de mise en forme des faisceaux ou de conjugaison) pour obtenir un système plus compact et/ou pour simplifier le packaging (moitié moins d'éléments à aligner). Cette variante est représentée figure 15. Dans ce cas, bien sûr, la moitié des éléments de chaque matrice mise en jeu est réservée aux faisceaux optiques d'entrée **2** et forme les sous-systèmes **40** et **30 ,** l'autre moitié est réservée aux faisceaux de sortie **6** et forme les sous-systèmes **45** et **35** (voir figure 16). Cette opération peut être effectuée grâce au montage optique montré figure 15 dans lequel à été incorporé dans le module de liaison MOLI **50** un miroir de renvoi **300** dont le plan focal image $F_{IM}$ est confondu avec le plan focal image $F_{IL}$ **52** de la lentille de focalisation **55 :** le reste de la configuration du module de liaison restant identique.

Sur la figure 15 , on a schématisé, pour une meilleure compréhension, le mode de fonctionnement d'un routeur de ce type réalisé à partir de barrettes de 8 éléments : les 4 éléments supérieurs voyant les faisceaux d'entrée et les 4 éléments inférieurs les faisceaux de sortie.

Bien entendu le montage se généralise au cas de matrices de dimensions quelconques, les éléments correspondant aux faisceaux de sortie étant symétriques, par rapport au centre de la matrice, des éléments correspondants aux faisceaux d'entrée.

Suivant l'ouverture angulaire totale occupée par l'ensemble des faisceaux mis en jeu, le miroir de renvoi peut être sphérique ou parabolique.

La configuration de la figure 15 est une configuration en ligne pour simplification mais le montage proposé s'applique de la même façon aux configurations pour lesquelles l'angle d'inclinaison $\varphi$ n'est pas nul, avec des variantes similaires à celles décrites dans la partie 4.1 consacrée au module de liaison.

### 4.8. optimisation du système de routage : position favorable des 'waist' des faisceaux lumineux gaussiens

Comme il a été souligné au début de la partie 4, les faisceaux lumineux issus des différentes fibres optiques peuvent être assimilés à des faisceaux gaussiens dont la forme gaussienne se conserve au cours des différentes conjugaisons optiques.

En sortie de la fibre optique , le faisceau possède un rayon minimum $\omega_{FOE}$ appelé couramment 'waist' ; il diverge ensuite de façon hyperbolique dont les 2 asymptotes sont séparées angulairement d'un angle $\Delta\varphi_{FOE}$ dont la valeur est (voir figure 3) :

$$\Delta\varphi_{FOE} = 2\lambda/\Pi^{\star}\omega_{FOE}$$

$\Delta\varphi_{FOE}$ est l'ouverture angulaire (ou divergence) du faisceau gaussien issu de la fibre optique. Après collimation par les micro-lentilles du sous-système de mise en forme 40, ces faisceaux restent gaussiens avec un 'waist' de dimension $\omega_{FIE}$ et une ouverture angulaire :

$$\Delta\varphi_{FIE} = 2\lambda / \Pi * \omega_{FIE}$$

Dans un système d'imagerie optique mettant en jeu des faisceaux gaussiens, la position des 'waist' obéit à des règles de conjugaison voisines de celles qui régissent l'optique géométrique, excepté au voisinage des foyers de l'optique d'imagerie. Sans rentrer dans les détails des équations qui permettent de calculer la position des 'waist' objet et image donnés par une lentille, il faut retenir que la principale différence est que, si la position du 'waist' du faisceau gaussien se situe au foyer objet de la lentille, la position du waist image sera non pas à l'infini comme le voudrait une conjugaison objet -image classique, mais au foyer image de cette lentille.

Dans le cas du dispositif de l'invention, il peut être intéressant que la position des 'waist' des différents faisceaux lumineux mis en jeu soit située dans le plan des éléments des différents moyens de déflexion pour deux raisons :

☐ le 'waist' correspondant à la dimension minimale d'un faisceau gaussien, c'est dans cette situation que les miroirs du dispositif auront les dimensions minimum (encombrement plus réduit et plus grande facilité de réalisation des miroirs en micro-technologies),

☐ au niveau du 'waist' la surface équiphase du faisceau gaussien est plane (sphérique ailleurs) ce qui minimise les aberrations optiques lors des réflexions miroir.

Il faut noter ici que cette configuration avantageuse impose en général l'utilisation de systèmes optiques de conjugaison, entre les éléments de déflexion, composés de lentilles (de préférence au nombre de 2) de focales adaptées à réaliser le grossissement $G_{I,I+1}$ nécessaire.

Dans la réalisation du routeur , on cherchera donc à se placer dans cette situation illustrée pour le module d'entrée de mise en forme 40, figures 4a ou 4b, dans laquelle le 'waist' $\omega_{FOE}$ de la fibre optique a son image $\omega_{FIE}$ dans le plan des différents éléments du premier moyen de déflexion MD[1E].

De même, on cherchera à réaliser le même type de conjugaison entre les « waist » des faisceaux gaussiens issus des éléments de déflexion MD[NE] du dernier étage de la cascade de moyens de déflexion d'entrée, et les « waist » des faisceaux gaussiens correspondants orientés par le module de liaison vers les éléments de déflexion MD[1S] du premier étage de la cascade de moyens de déflexion de sortie.

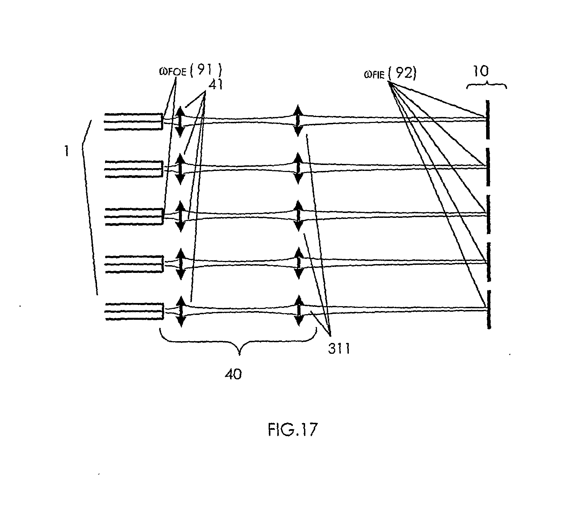

En général cette configuration favorable sera toujours réalisable. Cependant, les 'waist' image donnés par les micro-lentilles de collimation du module de mise en forme sont le plus souvent peu distants de celles-ci du fait de la faible longueur focale $f_{MFE}$ de ces lentilles, conduisant à des difficultés de positionnement du premier moyen de déflexion. Il est alors favorable de rajouter après la matrice de lentilles de mise en forme 41 une matrice de lentilles de transport 311 de plus grande focale qui permet de surmonter ce problème en formant une nouvelle image, plus lointaine, du 'waist' $\omega_{FIE}$ . Cette variante est représentée figure 17 en configuration en ligne.

Bien sûr la même configuration sera utilisée pour le module de mise en forme de sortie.

On appréciera que les exemples de réalisation qui viennent d'être décrits, à titre préféré, proposent :

- un dispositif de routage optique point à point permettant d'orienter de manière bi-univoque les informations transportées par une fibre optique quelconque parmi $N_E$ fibres d'un réseau de fibres optiques d'entrée 1 vers une fibre optique quelconque parmi $N_S$ fibres d'un réseau de fibres optiques de sortie 5 caractérisé par la mise en jeu des élément suivants :

- Un sous-système ou module de mise en forme d'entrée 40 composés de moyens optiques d'entrée permettant la mise en forme de chacun des $N_E$ faisceaux lumineux issus de chacune des $N_E$ fibres optiques d'entrée et de générer $N_E$ faisceaux optiques parallèles 112 et d'ouverture angulaire adaptée,
- Un sous-système ou module de déflexion d'entrée 30 permettant la multiplication du nombre de positions de déflexion angulaire des faisceaux lumineux d'entrée et composé d'un ensemble de N moyens de déflexion $MD^{1E}$ , $MD^{2E}$ ... $MD^{IE}$ ... $MD^{NE}$ , mis en cascade comprenant chacun au moins $N_E$ éléments de déflexion disposés suivant une configuration identique à celle des $N_E$ faisceaux optiques d'entrée et permettant de générer pour chacun de ces faisceaux optiques d'entrée un nombre $P_{TN}$ de positions .de déflexion angulaire distinctes, au moins égal au nombre $N_S$ de fibres du réseau de fibres optiques de sortie,
- Un module de liaison 50 permettant de rassembler en un même point de l'espace toutes les positions de déflexion potentielles parallèles entre elles que peuvent prendre en sortie de chacun des éléments du dernier moyen de déflexion $MD^{NE}$ du sous- système de déflexion d'entrée les $N_E$ faisceaux lumineux parallèles formés par le sous-système de mise en forme d'entrée .

  Le module de liaison fournit donc un nombre $P_{TN}$ de points de focalisation spatiale potentielle égal au nombre $P_{TN}$ de positions de déflexion angulaire potentiellement fournies par chacun des $N_E$ éléments du dernier moyen de déflexion $MD^{NE}$ et assure une correspondance bi-univoque entre ces $P_{TN}$ positions de déflexion angulaire et ces $P_{TN}$ points de focalisation spatiale.
- Un sous- système de déflexion de sortie 35 permettant la réorientation des $P_{TN}$ faisceaux lumineux potentiellement générés en sortie du module de liaison 50 ,et composé d'un ensemble de N' (au moins égal à N) moyens de déflexion $MD^{1S}$, $MD^{2S}$ ... $MD^{IS}$ ... $MD^{N'S}$ mis en en cascade comprenant chacun $P_{TN}$ (au moins égal à $N_S$) éléments de déflexion et permettant la réorientation angulaire de chacun des $P_{TN}$ faisceaux lumineux incidents sur chacun des $P_{TN}$ éléments du premier moyen de déflexion $MD^{1S}$ afin de les rendre parallèles à une même direction commune.
- Un sous-système ou module de mise en forme de sortie 45 composé de moyens optiques de sortie permettant la mise en forme de chacun des $P_{TN}$ faisceaux lumineux parallèles potentiellement générés en sortie du dernier moyen de déflexion $MD^{N'S}$ du sous-système de démultiplication et permettant d'adapter les caractéristiques optiques de ces $P_{TN}$ faisceaux parallèles aux caractéristiques optiques des fibres optiques de sortie afin de pouvoir injecter $N_S$ (parmi $P_{TN}$) de ces faisceaux dans les $N_S$ fibres optiques avec le moins de pertes possibles.

- un dispositif de routage optique du type précité dans lequel les sous-systèmes de déflexions d'entrée de sortie sont des modules de multiplication de positions de déflexion angulaire décrits dans la demande de brevet déposée le même jour. Ces modules utilisent une cascade de moyens de déflexion $MD^1$, $MD^2$,...$MD^I$,...$MD^N$ dont deux moyens consécutifs $MD^I$ et $MD^{I+1}$ sont conjugués optiquement par des moyens de conjugaison optique $MCO^I$ avec un grossissement :

$$G_{I,I+1} = P_I * (P_{I+1} -1) /( P_I -1)$$

où **$P_I$** et **$P_{I+1}$** représentent le nombre de positions angulaires pouvant être prises par les éléments de déflexion des moyens de déflexion $MD^{IE}$ et $MD^{I+1E}$. Lorsque **$P_I = P_{I+1} = P$ , $G_{I,I+1} = P$ .**

- un dispositif de routage du type précité dans lequel le module de liaison 50 est constitué d'un moyen de focalisation 55 réfractif (lentille) ou réflectif (miroir) permettant de focaliser l'ensemble des $P_{TN}$ * $N_E$ faisceaux lumineux potentiellement défléchis par les $N_E$ éléments du dernier moyen de déflexion $MD^{NE}$ du sous-système de déflexion d'entrée 30 dans son plan focal image 52 et de réaliser ainsi une correspondance bi-univoque entre les $P_{TN}$ positions de déflexion angulaire distinctes parallèles (c'est à dire qui correspondent aux mêmes angles de déflexion par rapport à un repère du système commun) générés par les éléments du dernier moyen de déflexion $MD^{NE}$ et les $P_{TN}$ foyers images vers lesquels vont converger les $P_{TN}$ faisceaux potentiellement défléchis correspondants.
- un dispositif de routage du type précité dans lequel les $N_E$ éléments du dernier moyen de déflexion $MD^{NE}$ du sous-système de déflexion d'entrée 30 sont situés dans le plan focal objet 51 du moyen de focalisation du module de liaison 50.
- un dispositif de routage du type précité suivant lequel le module de liaison 50 met en jeu des moyens optiques d'augmentation 56 et de diminution 57 des écarts angulaires entre les $P_{TN}$ positions de déflexion des faisceaux lumineux potentiels respectivement générées par chacun des éléments du dernier moyen de déflexion $MD^{NE}$ et focalisées sur chacun des éléments du premier moyen de déflexion $MD^{1S}$ ; ces moyens optiques 56 et 57 permettant de diminuer les dimensions du module de liaison.

Dans cette configuration, les plans focaux objet 51 et image 52 du moyen de focalisation du module de liaison coïncident respectivement avec les plans images donnés par les moyens optiques d'augmentation 56 et de diminution 57 des écarts angulaires des éléments de déflexion des moyens de déflexion respectivement $MD^{NE}$ et $MD^{1S}$ .

- un dispositif de routage du type précité dans lequel le module de liaison 50 comporte un miroir de renvoi 300 dont le plan focal image $F_{IM}$ est confondu avec le plan focal image 52 de la lentille de focalisation 50. Ce miroir de renvoi permet un repliement du système de routage et rend possible l'utilisation des mêmes matrices d'éléments pour les différents sous-système d'entrée et de sortie : une moitié des éléments des différentes matrices est mise en jeu pour les sous-systèmes d'entrée, l'autre moitié, symétrique par rapport au centre des différentes matrices, étant mise en jeu pour les sous-systèmes de sortie.
- un dispositif de routage optique du type précité dans lequel les fibres d'entrées 1 et les différents sous systèmes d'entrée (moyens optiques de mise en forme d'entrée 40, moyens de déflexion et de conjugaison du sous-système de déflexion d'entrée 30, et éventuellement moyens optiques éventuels d'augmentation 56 des écarts angulaires des positions de déflexion du module de liaison 50) sont disposés en barrettes linéaires de $N_E$ éléments ou en matrices de $N'_E * N''_E = N^E$ éléments.
- un dispositif de routage optique du type précité dans lequel les différents sous systèmes de sortie (moyens optiques éventuels de diminution 57 des écarts angulaires des positions de déflexion du module de liaison 50, moyens de déflexion et de conjugaison du sous-système de déflexion de sortie 55 et moyens optiques de mise en forme 45 de sortie) et les fibres optiques de sortie 5 sont disposées en barrettes linéaires de $N_S$ éléments ou en matrices de $N'_S * N''_S = N_S$ éléments ; les $P_{TN}$ positions de déflexion angulaire distinctes générées par chacun des éléments du dernier moyen de déflexion $MD^{NE}$ sont alors respectivement configurées en barrettes d'au moins $N_S$ positions ou en matrices d'au moins $N'_S$ lignes et $N''_S$ colonnes.
- un dispositif de routage optique du type précité dans lequel les différents moyens optiques de collimation ou d'imagerie associés aux différents sous-système du routeur sont des barrettes ou des matrices composées d'éléments de type micro-lentilles ou micro-miroirs pouvant être réalisés par les procédés de fabrication collective mises en jeu dans les micro-technologies.
- un dispositif de routage du type précité dans lequel les moyens de déflexion des sous- systèmes de déflexion d'entrée 30 et de sortie 35 sont composés de barrettes ou de matrices d'éléments miroirs adressables électriquement et sont situés dans des plans parallèles d'angle d'inclinaison moyenne φ par rapport à l'axe optique général du système. Dans cette configuration 'repliée' le moyen de focalisation 55 du module de liaison 50 et les différents moyens optiques de collimation ou d'imagerie associés aux différents sous-système du routeur sont également situés dans de mêmes plans parallèles inclinés de l'angle φ de façon à garder une parfaite symétrie entre les différentes familles de faisceaux défléchis.
- un dispositif de routage optique du type précité dans lequel les moyens de déflexion des sous-systèmes de déflexion d'entrée 30 et de sortie 35 sont des barrettes ou des matrices d'éléments adressables électriquement, de type micro-miroirs pouvant être réalisés par les procédés de fabrication collective mises en jeu dans les micro-technologies.
- un dispositif de routage optique du type précité dans lequel chacun des éléments des différents moyens optiques réfractifs de collimation ou de conjugaison mis en jeu dans les configurations 'repliées' 'd'angle d'inclinaison φ est positionné angulairement de façon que son axe optique reste parallèle à l'axe optique général (parallèle à la direction de déflexion moyenne de l'ensemble des faisceaux défléchis) du système de façon à minimiser les aberrations géométriques affectant les différents faisceaux optiques mis en jeu tout en préservant la symétrie du système.
- un dispositif de routage optique en configuration repliée du type précité dans lequel le module de liaison 50 mis en jeu dans les configuration 'repliées' d'angle d'inclinaison φ utilise des moyens optiques de basculement angulaire 58 et 59 permettant de rassembler les différents faisceaux potentiellement défléchis en sortie de chacun des éléments du dernier moyen de déflexion $MD^{NE}$ dans un plan perpendiculaire à l'axe optique général du système puis d'opérer l'opération inverse sur les différents faisceaux de façon à les refocalisés sur chacun des éléments du premier moyen de déflexion $MD^{1S}$ . Ces moyens de basculement angulaire permettent d'utiliser un moyen de focalisation 55 du module de liaison de type réfractif et de pouvoir le faire travailler dans une configuration perpendiculaire à l'axe optique général du système qui permet de minimiser les aberrations optiques induites par l'inclinaison φ. Ces moyens de basculement 58 et 59 peuvent par exemple être constitués de barrettes ou de matrices de micro-lentilles ou de micro miroirs dont la focale des différents éléments est calculée pour que chacune des conjugaisons optiques mises en jeu présente le même grossissement.
- un dispositif de routage optique en configuration repliée du type précité dans lequel les moyens de basculement angulaire 58 et 59 jouent en même temps le rôle des moyens d'augmentation 56 et de diminution 57 des écarts angulaires entre les faisceaux défléchis potentiels mis en jeu.

- un dispositif dit routeur diviseur de puissance caractérisé par l'introduction à l'entrée du routeur point à point 150 du type précité d'un composant 60 permettant de partager par exemple en K parties égales ou inégales la puissance lumineuse (et donc l'ensemble des informations transportées par chacune des fibres optiques) de chacune des fibres d'une barrette linéaire de $N_E$ fibres d'entrée et de disposer d'une matrice de K * $N_E$ faisceaux lumineux 112 , chacun pouvant être orienté par le routeur point à point 150 vers l'une quelconque des fibres de sortie disposé en barrettes ou en matrices et dont le nombre $N_S$ est au moins égal à K*$N_E$ .

- un dispositif dit routeur diviseur de puissance du type précité caractérisé par l'utilisation de composants diviseurs de puissance 60 réalisés en optique intégrée ; chacun des composants diviseurs de puissance 130 est connecté avec une fibre d'entrée et permet à partir de la barrette de $N_E$ fibres d'entrée de générer une matrice de faisceaux lumineux 112 de K lignes et $N_E$ colonnes pouvant être mise en forme par le sous-système de mise en forme d'entrée 40 du routeur point à point 150.

- un dispositif dit routeur diviseur de puissance du type précité caractérisé par l'utilisation de composants diviseurs de puissance réalisés en optique espace libre et comprenant :

  • une première barrette 61 de $N_E$ moyens de collimation (micro-lentilles ou micro-miroirs) qui permet de collimater les $N_E$ faisceaux lumineux issus de chacune des fibres optiques d'entrée 1 dans la direction de l'axe de la barrette et de laisser inchangée ou d'augmenter leur ouverture angulaire dans la direction orthogonale. Cette première barrette 61 constituée par exemple de micro-lentilles cylindriques fournie $N_E$ lignes de lumière très dissymétriques 64 et orientées suivant des axes perpendiculaires au plan défini par l'axe de la barrette de fibres et l'axe optique des faisceaux lumineux.
  • une seconde barrette 62 de $N_E$ moyens de collimation réflectifs ou réfractifs permettant de collimater les $N_E$ lignes de lumière formées. Ces moyens de collimation pouvant par exemple être des lentilles cylindriques dont l'axe de convergence est perpendiculaire à l'axe de convergence des moyens de collimation de la première barrette 61 et dont la focale est calculée pour obtenir des lignes de lumière de géométrie adaptée.
  • une matrice 63 de K*$N_E$ moyens optiques réfractifs ou réflectifs de mise en forme permettant de générer à partir des $N_E$ lignes de lumière K * $N_E$ faisceaux lumineux 112 de caractéristiques optiques adaptées au routeur point à point 150.

- un dispositif dit routeur-démultiplexeur de variables optiques caractérisé par l'introduction à l'entrée du routeur point à point décrit précédemment d'un composant 70 permettant de séparer les différentes variables optiques $v_1$, $v_2$... $v_L$, pouvant être utilisées comme support des informations transportées (longueurs d'ondes lumineuses, longueurs temporelles des impulsions lumineuses , états de polarisation de la lumière...). Si le composant démultiplexeur 70 de variables optiques considéré permet la séparation spatiale de L variables, sa connexion avec chacune des fibres optiques d'une barrette de $N_E$ fibres optiques d'entrée 1 permettra de générer L * $N_E$ faisceaux lumineux 112 (correspondant à L * $N_E$ canaux d'information) pouvant être orientés par le routeur point à point 150 vers l'une quelconque des fibres de sortie disposées en barrettes ou en matrices et dont le nombre $N_S$ est au moins égal à L * $N_E$ .

- un dispositif dit routeur démutiplexeur de variables optiques du type précité caractérisé par l'utilisation de composants démutiplexeur 70 de variables optiques réalisés en optique intégrée; chacun des composants démutiplexeur de variables optiques étant connecté avec une fibre d'entrée et permettant à partir de la barrette de $N_E$ fibres d'entrée 1 de générer une matrice de faisceaux lumineux 112 de L lignes et $N_E$ colonnes pouvant être mise en forme par le sous-système de mise en forme d'entrée du routeur point à point 150.

- un dispositif dit routeur démutiplexeur de variables optiques selon la revendication 17 et 18, pour lequel la variable optique considérée est la longueur d'onde lumineuse λ et pour lequel le composant démultiplexeur 70 utilisé est désigné en optique intégrée sous le terme AWG (Array Waveguides Gratings) ou 'Phasar '(pour Phase Array) 140.

- un dispositif dit routeur démultiplexeur de variables optiques du type précité, pour lequel la variable optique considérée est la longueur d'onde lumineuse λ caractérisé par l'utilisation de composants démultiplexeur 70 réalisés en optique espace libre et comprenant :

  • une première barrette 71 de $N_E$ moyens de collimation (micro-lentilles ou micro-miroirs) qui permet de collimater les $N_E$ faisceaux lumineux issus de chacune des fibres optiques d'entrée 1 avec l'ouverture angulaire adaptée.
  • une barrette 72 de réseaux de diffraction dont les traits sont orientés parallèlement à l'axe de la barrette de fibres d'entrée 1 et permettant de séparer spatialement les différentes longueurs d'ondes $\lambda_1$, $\lambda_2$, ... $\lambda_L$ transportées par chacune des $N_E$ fibres optiques d'entrée. La barrette de réseaux sera inclinée par rapport à des plans perpendiculaires à l'axe optique du système d' un angle dépendant de l'ouverture angulaire des faisceaux lumineux incidents et de l'écart des longueurs d'ondes des faisceaux adjacents diffractés par le réseau.

- une barrette 74 de moyens optiques permettant de réorienter suivant des directions parallèles chacun des L faisceaux lumineux de longueur d'onde $\lambda_1$, $\lambda_2$, ... $\lambda_L$ attachés à chacune des $N_E$ fibres optiques d'entrée et générés par le réseaux de diffraction .
- une matrice de moyens optiques réfractifs ou réflectifs de mise en forme disposés en $N_E$ colonnes et L lignes et permettant éventuellement d'adapter les caractéristiques optiques des L * $N_E$ . faisceaux lumineux 112 obtenues au routeur point à point 150

- un dispositif dit routeur démutiplexeur- multiplexeur de variables optiques caractérisé par l'introduction à l'entrée et à la sortie du routeur point à point décrit précédement d'un composant de démultiplexage 70 des variables optiques considérées (longueurs d'ondes ,longueurs des impulsions lumineuses, état de polarisation ...) à l'entrée et de multiplexage 80 des mêmes variables en sortie. Ce dispositif permet :

- grâce au démultiplexeur 70 de séparer spatialement les L variables optiques $v_1$, $v_2$... $v_L$ transportées par chacune des $N_E$ fibres d'entrée , et de générer L * $N_E$ faisceaux lumineux parallèles de caractéristiques optiques adaptées et disposés en matrices de $N_E$ colonnes et de L lignes, chaque ligne étant attachée à une même variable optique $v_l$ .
- grâce au routeur point à point 150 de réorienter à l'intérieur de chacune des L lignes, chacun des $N_E$ faisceaux lumineux attaché à la même variable optique $v_i$ et de générer en sortie du routeur, L lignes d'au moins $N_S$ = $N_E$ faisceaux potentiels parallèles.
- grâce au multiplexeur 80 de rassembler ces L lignes en une seule et de réinjecter à nouveau L variables optiques dans une quelconque des fibres de sortie disposées en barrettes et dont le nombre $N_S$ est au moins égal à $N_E$ .

- un dispositif dit routeur démutiplexeur- multiplexeur de variables optiques du type précité caractérisé en ce que la variable optique considérée est la longueur d'onde $\lambda$ et que les démultiplexeurs 70 et les multiplexeurs 80 utilisés réalisés en optique intégrée sont de type AWG,140.
- un dispositif dit routeur démutiplexeur- multiplexeur de variables optiques du type précité caractérisé en ce que la variable optique considérée est la longueur d'onde $\lambda$ et que les démultiplexeurs 70 et les multiplexeurs 80 utilisés réalisés en optique espace libre sont de type de celui décrit plus haut.
- un dispositif dit routeur démutiplexeur- multiplexeur généralisé de variables optiques caractérisé, comme ci-dessus, par l'introduction à l'entrée et à la sortie du routeur point à point décrit plus haut, d'un composant de démultiplexage 70 des variables optiques considérées (longueurs d'ondes ,longueurs des impulsions lumineuses , états de polarisation ...) à l'entrée et de multiplexage 80 des mêmes variables en sortie mais dans lequel :

- le démultiplexeur 70 permet comme ci-dessus de séparer spatialement les L variables optiques $v_1$, $v_2$... $v_L$ transportées par chacune des $N_E$ fibres d'entrée, et de générer L * $N_E$ faisceaux lumineux parallèles 112 de caractéristiques optiques adaptées et disposés en matrices de $N_E$ colonnes et de L lignes, chaque ligne étant attachée à une même variable optique $v_l$.
- le routeur point à point 150 permet de réorienter à l'intérieur de chacune des L lignes, chacun des $N_E$ faisceaux lumineux attachés à la même variable optique $v_l$ et de générer en sortie, L lignes d'au moins $N_S$ = L * $N_E$ faisceaux potentiels parallèles (au lieu d'au moins $N_E$ avec le routeur point à point précité).
- le multiplexeur 80 permet de rassembler ces L lignes en une seule et de réinjecter dans une quelconque des fibres de sortie disposées en barrettes et dont le nombre $N_S$ est au moins égal à L * $N_E$, un nombre quelconque de canaux attachés aux différentes variables optiques $v_l$ compris entre 1 et L (au lieu de L avec le routeur point à point précité).

- un dispositif dit routeur démutiplexeur- multiplexeur généralisé de variables optiques du type précité caractérisé en ce que la variable optique considérée est la longueur d'onde $\lambda$ et que les démultiplexeurs 70 et les multiplexeurs 80 utilisés réalisés en optique intégrée sont de type AWG 140.
- un dispositif dit routeur-démutiplexeur- multiplexeur généralisé de variables optiques du type précité caractérisé en ce que la variable optique considérée est la longueur d'onde $\lambda$ et que les démultiplexeurs 70 et les multiplexeurs 80 utilisés réalisés en optique espace libre sont de type de celui décrit ci-dessus.
- un dispositif de routage optique d'un quelconque type précité, caractérisé par l'introduction de moyens de contrôle de fonctionnement 90 placés en sortie de chacun des moyens de déflexion des différents modules (MAPA) mis en jeu, ou seulement en sortie de quelques moyens de déflexion particulier (comme par exemple le dernier moyen $MD^{NE}$ du sous-système de déflexion d'entrée du routeur et le premier moyen $MD^{1S}$ du sous- système de sortie du routeur), et comportant:

- des moyens de séparation spatiale 160 ou 161 permettant de prélever une fraction de la puissance lumineuse des faisceaux optiques de signal défléchis par les différents moyens de déflexion ou une fraction de la puissance lumineuse de faisceaux optiques annexes superposés aux faisceaux de signal.
- des moyens optiques d'imagerie 164 permettant de transformer de manière bi -univoque les différentes positions de déflexion angulaire en autant de positions spatiales ; ces moyens optiques d'imagerie étant groupés suivant des configurations identiques à celles des moyens de déflexion (barrettes ou matrices d'éléments),
- des moyens de détection 165 des positions spatiales ainsi formées comportant un nombre de points au moins égal au nombre total de positions angulaires générées au niveau de l'étage de contrôle considéré ; la configuration des points du photodétecteur étant homothétique de celle de l'ensemble des positions de déflexion angulaire à contrôler. Ces moyens de détection peuvent être favorablement des barrettes ou des matrices de photodétecteurs CMOS disponibles commercialement.
- éventuellement des moyens optiques d'adaptation d'image 166 pour adapter les dimensions des composants mis en jeu par les moyens de contrôle.

- un dispositif du type précité caractérisé par le fait que les positions des 'waist' des faisceaux gaussiens mis en jeu au cours des différentes conjugaisons optiques 'objet-image' sont localisés au niveaux des éléments des différents moyens de déflexion.
- un dispositif du type précité caractérisé par l'insertion dans le module de mise en forme des faisceaux d'une barrette ou d'une matrice de micro-lentilles de transport permettant de déporter la position des 'waist' donnée par les différentes lentilles de collimation .

Ces moyens de contrôle 90 sont décrits en détail dans la demande de brevet déposée le même jour.

## 5. <u>REFERENCES</u>

.

Fully provisioned 112* 112 micro-mechanical optical crossconnect with 35.8 Tb/s demonstrated capacity', D.T Neilson et al , Optical , Fiber Communication Conférence , OFC 2000 , Post dead line papers , paper PD12 , Baltimore , Mach 7 - 10 , 2000
'Optical MEMS answer high-speed networking requirements ', Electronics Design ,
April 5 ,1999 .
'Laser Focus World ', January 2000 , 127 - 129.
' Technologies et Stratégies ', numéro 20 , Février - Avril 2000 .

.

### Revendications

**1.** Dispositif de routage optique permettant de coupler chacune d'une pluralité de $N_E$ voies d'arrivée optique (1) à l'une quelconque d'une pluralité de $N_S$ voies de sortie optique (5) et orienter chacun des faisceaux optiques arrivant par les voies d'arrivée optique vers l'une quelconque des $N_S$ voies de sortie optique, comportant :

- un module d'entrée (40) ayant $N_E$ entrées optiques, apte à mettre en forme chacun des faisceaux arrivant par les voies d'arrivée optique, de façon à obtenir une pluralité de faisceaux optiques mis en forme (112),
- un module de déflexion d'entrée (30) apte à générer pour chacune des entrées une position quelconque choisie parmi un nombre $P_{TN}$ de positions de déflexion angulaire distinctes au moins égal au nombre $N_S$ de voies de sortie optiques, ce module de déflexion d'entrée (30) comportant $N_E$ lignes comportant chacune une pluralité d'éléments de déflexion disposés en cascade et pouvant prendre chacun une pluralité de configurations de déflexion angulaire en nombre inférieur au nombre $P_{TN}$,
- un module de liaison (50) apte à rassembler de façon bi-univoque sur $P_{TN}$ points de focalisation spatiale, respectivement, les $P_{TN}$ positions de déflexion angulaire de chacune des entrées, ce module étant apte à générer $P_{TN}$ faisceaux optiques intermédiaires,
- un module de déflexion de sortie (35) ayant $P_{TN}$ entrées aptes à intercepter les $P_{TN}$ faisceaux optiques intermédiaires, et apte à générer, à partir des faisceaux optiques intermédiaires, $N_S$ faisceaux de sortie, ce module de déflexion de sortie (35) comportant $N_S$ lignes comportant chacune une pluralité d'éléments de déflexion en cascade pouvant prendre une pluralité de configurations de déflexion angulaire en nombre inférieur au nombre $N_S$, et
- un module de sortie optique (45) apte à mettre en forme chacun des $N_S$ faisceaux de sortie en sorte de pouvoir les appliquer aux $N_S$ voies de sortie,

et dans lequel

* dans chaque ligne, chaque élément de déflexion (MD) est couplé au précédent par un élément de conjugaison optique (MCO) apte à réaliser une conjugaison objet-image entre cet élément de déflexion et le précédent,
* chaque élément de conjugaison optique a un grossissement :

$$G_{I,I+1} = P_I * (P_{I+1} - 1) / (P_I - 1)$$

où $P_I$ et $P_{I+1}$ représentent le nombre de positions angulaires pouvant être prises par les éléments de déflexion I et I+1 entre lesquels cet élément de conjugaison optique est disposé.

2. Dispositif selon la revendication 1, **caractérisé en ce que** les voies d'entrée (1) et les voies de sortie (5) sont parallèles.

3. Dispositif selon la revendication 1 ou la revendication 2, **caractérisé en ce que** chaque élément de conjugaison associé à deux éléments de déflexion consécutifs comporte au moins deux lentilles en configuration confocale dont le rapport des focales est égal au grossissement recherché entre les deux éléments de déflexion.

4. Dispositif selon l'une quelconque des revendications 1 à 3, **caractérisé en ce que**, dans au moins une ligne, les éléments de déflexion optique ont un même nombre de positions angulaires, et le grossissement est égal à ce nombre.

5. Dispositif selon l'une quelconque des revendications 1 à 4, dans lequel les éléments de déflexion sont des miroirs orientables au moins autour d'un axe de basculement.

6. Dispositif selon la revendication 5, **caractérisé en ce que** les éléments de déflexion sont des miroirs orientables suivant deux positions angulaires autour de chaque axe de basculement et le grossissement $G_{I,I+1}$ est égal à 2.

7. Dispositif selon l'une quelconque des revendications 1 à 6, dans lequel les éléments de déflexion angulaire homologues au sein des lignes sont répartis en une pluralité d'ensembles en nombre égal au nombre d'entrées optiques.

8. Dispositif selon la revendication 7, dans lequel les ensembles ont des axes optiques parallèles.

9. Dispositif selon l'une quelconque des revendications 1 à 8, dans lequel le module de liaison (50) comporte un élément de focalisation (55) réfractif ou réflectif permettant de regrouper l'ensemble des $P_{TN} * N_E$ faisceaux en $P_{TN}$ points de focalisation spatiale dans un unique plan focal image (52).

10. Dispositif selon la revendication 9, dans lequel les $N_E$ sorties du module de déflexion d'entrée (30) sont situées dans le plan focal objet (51) de l'élément de focalisation du module de liaison (50) et les entrées du module de déflexion de sortie (35) sont situées dans le plan focal image de ce module de liaison.

11. Dispositif selon l'une quelconque des revendications 1 à 10 dans lequel le module de liaison (50) comporte des éléments optiques d'augmentation (56) et de diminution (57) des écarts angulaires entre les $P_{TN}$ positions de déflexion angulaire respectivement générées par chacune des sorties du module de déflexion d'entrée.

12. Dispositif selon l'une quelconque des revendications 1 à 11 dans lequel le module de liaison (50) comporte une lentille de focalisation et un miroir de renvoi (300) dont le plan focal image $F_{IM}$ est confondu avec le plan focal image (52) de cette lentille de focalisation.

13. Dispositif selon la revendication 12, ayant une configuration repliée dans laquelle sont utilisées de mêmes matrices d'éléments pour les modules de déflexion d'entrée et de sortie, une moitié des éléments des matrices étant mise en jeu pour le module de déflexion d'entrée, l'autre moitié, symétrique par rapport au centre des différentes matrices, étant mise en jeu pour le module de déflexion de sortie.

14. Dispositif selon l'une quelconque des revendications 1 à 13, dans lequel les modules comportent des éléments optiques disposés en barrettes ou en matrices.

15. Dispositif selon l'une quelconque des revendications 1 à 14, dans lequel les modules comportent des éléments optiques de type micro-lentilles ou micro-miroirs pouvant être réalisés par les procédés de fabrication collective mis en jeu dans les micro-technologies .

16. Dispositif selon l'une quelconque des revendications 1 à 15, dans lequel les éléments de déflexion d'entrée ou de sortie comportent des barrettes ou de matrices d'éléments miroirs individuellement adressables électriquement et situés dans des plans parallèles éventuellement inclinés en moyenne par rapport à l'axe optique général.

17. Dispositif selon l'une quelconque des revendications 1 à 16, dans lequel le module de liaison (50) a une configuration repliée et comporte des éléments optiques de basculement angulaire (58) et (59) permettant de rassembler les différents faisceaux potentiellement défléchis des sorties du module de déflexion d'entrée dans un plan perpendiculaire à l'axe optique général puis d'opérer l'opération inverse sur les différents faisceaux de façon à les orienter sur chacune des entrées du module de déflexion de sortie.

18. Dispositif selon la revendication 17, dans lequel le module de liaison comporte au moins un élément de focalisation (55) de type réfractif permettant de travailler dans une configuration perpendiculaire à l'axe optique général.

19. Dispositif selon la revendication 17 ou la revendication 18, dans lequel les moyens de basculement (58) et (59) comportent des barrettes ou des matrices de lentilles ou de miroirs, la focale des différents éléments formant les moyens de basculement étant calculée pour que chacune des conjugaisons optiques mises en jeu présente le même grossissement.

20. Dispositif selon l'une quelconque des revendications 17 à 19 dans lequel les éléments de basculement angulaire (58) et (59) constituent des éléments d'augmentation (56) et de diminution (57) des écarts angulaires entre les faisceaux défléchis potentiels mis en jeu.

21. Dispositif selon l'une quelconque des revendications 1 à 20, comportant, avant le module de déflexion d'entrée, un composant diviseur (60) permettant de partager en K parties égales ou inégales la puissance lumineuse de chacune des voies d'entrée et de disposer d'une matrice de $K * N_E$ faisceaux lumineux (112), chacun pouvant être orienté vers l'une quelconque des voies de sortie dont le nombre $N_S$ est au moins égal à $K*N_E$ .

22. Dispositif selon la revendication 21, dans lequel le composant diviseur est réalisé en optique intégrée.

23. Dispositif selon la revendication 21, dans lequel les composants diviseurs sont réalisés en optique espace libre et comprennent :

- une première barrette (61) de $N_E$ moyens de collimation qui permet de collimater les $N_E$ faisceaux lumineux issus de chacune des voies optiques d'entrée (1) dans la direction de l'axe de la barrette,
- une seconde barrette (62) de $N_E$ moyens de collimation réflectifs ou réfractifs permettant de collimater les $N_E$ lignes de lumière formées,
- une matrice (63) de $K*N_E$ éléments optiques réfractifs ou réflectifs de mise en forme permettant de générer, à partir des $N_E$ lignes de lumière, $K * N_E$ faisceaux lumineux (112) de caractéristiques optiques adaptées au module de déflexion d'entrée.

24. Dispositif selon l'une quelconque des revendications 1 à 20, comportant, avant le module de déflexion d'entrée, un composant démultiplexeur (70) permettant de séparer L variables optiques pouvant être utilisées comme support d'informations transportées, la connexion de ce composant avec chacune des voies optiques d'une barrette de $N_E$ fibres optiques d'entrée 1 permettant de générer $L * N_E$ faisceaux lumineux (112) appliqués au module de déflexion d'entrée, le nombre $N_S$ étant au moins égal à $L * N_E$.

25. Dispositif selon la revendication 24, dans lequel le composant démutiplexeur (70) est réalisé en optique intégrée.

26. Dispositif selon la revendication 24 ou la revendication 25, dans lequel le composant est apte à séparer la longueur d'onde lumineuse λ et est réalisé en optique intégrée.

**27.** Dispositif selon la revendication 24 ou la revendication 25, dans lequel le composant est apte à séparer la longueur d'onde lumineuse λ et est réalisé en optique espace libre et comprend :

- une première barrette (71) de $N_E$ moyens de collimation (lentilles ou miroirs) qui permet de collimater les $N_E$ faisceaux lumineux issus de chacune des voies optiques d'entrée (1) avec l'ouverture angulaire adaptée,
- une barrette (72) de réseaux de diffraction comportant des traits orientés parallèlement à l'axe de la barrette de voies d'entrée (1) et permettant de séparer spatialement différentes longueurs d'ondes $\lambda_1$, $\lambda_2$, ... $\lambda_L$ transportées par chacune des $N_E$ voies optiques d'entrée, la barrette de réseaux étant inclinée par rapport à des plans perpendiculaires à l'axe optique du système d'un angle dépendant de l'ouverture angulaire des faisceaux lumineux incidents et de l'écart des longueurs d'ondes des faisceaux adjacents diffractés par le réseau,
- une barrette (74) de moyens optiques permettant de réorienter suivant des directions parallèles chacun des L faisceaux lumineux de longueur d'onde $\lambda_1$, $\lambda_2$, ... $\lambda_L$ attachés à chacune des $N_E$ voies optiques d'entrée et générés par le réseau de diffraction,
- une matrice de moyens optiques réfractifs ou réflectifs de mise en forme disposés en $N_E$ colonnes et L lignes et permettant éventuellement d'adapter les caractéristiques optiques des L * $N_E$ faisceaux lumineux (112) obtenues au module de déflexion d'entrée.

**28.** Dispositif selon l'une quelconque des revendications 1 à 20, comportant, respectivement avant le module de déflexion d'entrée et après le module de déflexion de sortie, un composant de démultiplexage (70) de variables optiques en entrée, et un composant de multiplexage (80) des mêmes variables en sortie.

**29.** Dispositif selon la revendication 28, **caractérisé en ce que** la variable optique considérée est la longueur d'onde λ et que les démultiplexeurs (70) et les multiplexeurs (80) utilisés sont réalisés en optique intégrée.

**30.** Dispositif selon la revendication 28, **caractérisé en ce que** la variable optique considérée est la longueur d'onde λ et que les démultiplexeurs 70 et les multiplexeurs 80 utilisés sont réalisés en optique espace libre.

**31.** Dispositif selon l'une quelconque des revendications 1 à 20, apte au démultiplexage-multiplexage de variables optiques **caractérisé par** la présence, d'un composant de démultiplexage de ces variables avant le module de déflexion d'entrée, et d'un composant de multiplexage de ces variables après le module de déflexion de sortie, et par le fait que :

- le démultiplexeur (70) permet de séparer spatialement L variables optiques $v_1$, $v_2$... $v_L$ transportées par chacune des $N_E$ voies d'entrée , et de générer L * $N_E$ faisceaux lumineux parallèles (112) de caractéristiques optiques adaptées et disposés en matrices de $N_E$ colonnes et de L lignes, chaque ligne étant attachée à une même variable optique $v_l$,
- permet de réorienter, à l'intérieur de chacune des L lignes, chacun des $N_E$ faisceaux lumineux attachés à la même variable optique $v_l$ et de générer, en sortie du module de déflexion de sortie, L lignes d'au moins $N_S$ = L * $N_E$ faisceaux potentiels.
- le multiplexeur (80) permet de rassembler ces L lignes en une seule et de réinjecter dans une quelconque des voies de sortie disposées en barrettes et dont le nombre $N_S$ est au moins égal à L * $N_E$, un nombre quelconque de canaux attachés aux différentes variables optiques $v_l$ compris entre 1 et L.

**32.** Dispositif selon la revendication 31, **caractérisé en ce que** la variable optique considérée est la longueur d'onde λ et **en ce que** les démultiplexeurs (70) et les multiplexeurs (80) utilisés sont réalisés en optique intégrée.

**33.** Dispositif selon la revendication 31, **caractérisé en ce que** la variable optique considérée est la longueur d'onde λ et **en ce que** les démultiplexeurs (70) et les multiplexeurs (80) utilisés sont réalisés en optique espace libre.

**34.** Dispositif selon l'une quelconque des revendications 1 à 33, dans lequel des éléments de contrôle de fonctionnement sont placés en sortie d'une partie au moins du module de déflexion d'entrée ou du module de sortie, ces éléments de contrôle comportant des éléments de séparation spatiale permettant de prélever une partie des faisceaux.

**35.** Dispositif selon l'une quelconque des revendications 1 à 34, **caractérisé par le fait que** les faisceaux mis en jeu au cours des différentes conjugaisons optiques objet-image ont des waist dont les positions sont localisées au niveau des éléments des différents éléments de déflexion.

36. Dispositif selon l'une quelconque des revendications 1 à 35, **caractérisé en ce que** des lentilles de collimation donnent aux faisceaux un waist et **en ce qu'**un module de mise en forme des faisceaux d'une barrette ou d'une matrice de micro-lentilles de transport est prévu qui permet de déporter la position des waist.

37. Dispositif selon l'une quelconque des revendications 1 à 36, **caractérisé en ce que** les voies d'entrée et de sortie sont des fibres.

38. Dispositif selon l'une quelconque des revendications 1 à 37, **caractérisé en ce qu'**il comporte un élément ou un ensemble d'éléments de conjugaison supplémentaires disposé entre le module de déflexion d'entrée et le module de liaison et/ou entre le module de déflexion de sortie et le module de liaison.

**Patentansprüche**

1. Optische Router-Vorrichtung, die ermöglicht, jeden einer Mehrzahl $N_E$ von optischen Eingangswegen (1) mit irgendeinem einer Mehrzahl $N_S$ von optischen Ausgangswegen (5) zu koppeln und jedes Lichtstrahlenbündel, das über die optischen Eingangswege ankommt, zu irgendeinem der $N_S$ optischen Ausgangswege zu richten, mit:

   - einem Eingangsmodul (40), das $N_E$ optische Eingänge besitzt und jedes Strahlenbündel, das über die optischen Eingangswege ankommt, zu formen, derart, dass mehrere geformte Lichtstrahlenbündel (112) erhalten werden,
   - einem Eingangsablenkmodul (30), das für jeden der Eingänge eine beliebige Position erzeugen kann, die aus der Anzahl $P_{TN}$ verschiedener Winkelablenkpositionen, die wenigstens gleich der Anzahl $N_S$ von optischen Ausgangswegen ist, ausgewählt ist, wobei dieses Eingangsablenkmodul (30) $N_E$ Leitungen aufweist, die jeweils mehrere Ablenkelemente umfassen, die in Kaskade angeordnet sind und jeweils mehrere Winkelablenkkonfigurationen in einer Anzahl, die kleiner als die Anzahl $P_{TN}$ ist, annehmen können,
   - einem Verbindungsmodul (50), das die $P_{TN}$ Winkelablenkpositionen jedes der Eingänge an $P_{TN}$ Raumfokussierungspunkten in eineindeutiger Weise zusammenbringen kann, wobei dieses Modul $P_{TN}$ Zwischenlichtstrahlenbündel erzeugen kann,
   - einem Ausgangsablenkmodul (35), das $P_{TN}$ Eingänge besitzt, die die $P_{TN}$ Zwischenlichtstrahlenbündel abfangen können und anhand der Zwischenlichtstrahlenbündel $N_S$ Ausgangsstrahlenbündel erzeugen können, wobei dieses Ausgangsablenkmodul (35) $N_S$ Leitungen aufweist, die jeweils mehrere in Kaskade angeordnete Ablenkelemente besitzen, die mehrere Winkelablenkkonfigurationen in einer Anzahl, die kleiner als die Anzahl $N_S$ ist, annehmen können, und
   - einem optischen Ausgangsmodul (45), das jedes der $N_S$ Ausgangsstrahlenbündel in der Weise formen kann, dass sie in die $N_S$ Ausgangswege eingegeben werden können, und bei der

   * in jeder Leitung vor jedes Ablenkelement (MD) ein optisches Konjugationselement (MCO) geschaltet ist, das eine Objekt/Bild-Konjugation zwischen diesem Ablenkelement und dem vorhergehenden bewerkstelligen kann,
   * jedes optische Konjugationselement eine Vergrößerung

$$G_{I,I+1} = P_I \cdot (P_{I+1} - 1)/(P_I - 1)$$

   besitzt, wobei $P_I$ und $P_{I+1}$ die Anzahl von Winkelpositionen repräsentieren, die die Ablenkelemente I bzw. I + 1, zwischen denen dieses optische Konjugationselement angeordnet ist, einnehmen können.

2. Vorrichtung nach Anspruch 1, **dadurch gekennzeichnet, dass** die Eingangswege (1) und die Ausgangswege (5) parallel sind.

3. Vorrichtung nach Anspruch 1 oder Anspruch 2, **dadurch gekennzeichnet, dass** jedes Konjugationselement, das zwei aufeinander folgenden Ablenkelementen zugeordnet ist, wenigstens zwei Linsen mit konfokaler Konfiguration, deren Brennweitenverhältnis gleich der gewünschten Vergrößerung zwischen den zwei Ablenkelementen ist, umfasst.

**4.** Vorrichtung nach einem der Ansprüche 1 bis 3, **dadurch gekennzeichnet, dass** in wenigstens einer Leitung die optischen Ablenkelemente die gleiche Anzahl von Winkelpositionen besitzen, und die Vergrößerung gleich dieser Anzahl ist.

**5.** Vorrichtung nach einem der Ansprüche 1 bis 4, bei der die Ablenkelemente Spiegel sind, die wenigstens um eine Kippachse orientierbar sind.

**6.** Vorrichtung nach Anspruch 5, **dadurch gekennzeichnet, dass** die Ablenkelemente Spiegel sind, die um jede Kippachse in zwei Winkelpositionen orientierbar sind, und die Vergrößerung $G_{l,l+1}$ gleich 2 ist.

**7.** Vorrichtung nach einem der Ansprüche 1 bis 6, bei der die homologen Winkelablenkelemente in den Leitungen auf mehrere Gesamtheiten verteilt sind, deren Anzahl gleich der Anzahl der optischen Eingänge ist.

**8.** Vorrichtung nach Anspruch 7, bei der die Gesamtheiten parallele optische Achsen besitzen.

**9.** Vorrichtung nach einem der Ansprüche 1 bis 8, bei der das Verbindungsmodul (50) ein refraktives oder reflexives Fokussierungselement (55) umfasst, das ermöglicht, alle $P_{TN} \cdot N_E$ Strahlenbündel in einer einzigen Bildbrennebene (52) in $P_{TN}$ Raumfokussierungspunkte zu gruppieren.

**10.** Vorrichtung nach Anspruch 9, bei der die $N_E$ Ausgänge des Eingangsablenkmoduls (30) sich in der Objekt-Brennebene (51) des Fokussierungselements des Verbindungsmoduls (50) befinden und die Eingänge des Ausgangsablenkmoduls (35) sich in der Bild-Brennebene dieses Verbindungsmoduls befinden.

**11.** Vorrichtung nach einem der Ansprüche 1 bis 10, bei der das Verbindungsmodul (50) optische Elemente zur Vergrößerung (56) und Verkleinerung (57) der Winkelabstände zwischen den $P_{TN}$ Winkelablenkpositionen, die durch jeden der Ausgänge des Eingangsablenkmoduls erzeugt werden, umfasst.

**12.** Vorrichtung nach einem der Ansprüche 1 bis 11, bei der das Verbindungsmodul (50) eine Fokussierungslinse und einen Umkehrspiegel (300), dessen Bild-Brennebene $F_{IM}$ mit der Bild-Brennebene (52) dieser Fokussierungslinse zusammenfällt, umfasst.

**13.** Vorrichtung nach Anspruch 12, die eine umgeklappte Konfiguration besitzt, in der die gleichen Elementmatrizen für die Eingangs- und Ausgangsablenkmodule verwendet werden, wobei die Hälfte der Elemente der Matrizen für das Eingangsablenkmodul verwendet wird und die andere Hälfte, die in Bezug auf das Zentrum der anderen Matrizen symmetrisch ist, für das Ausgangsablenkmodul verwendet wird.

**14.** Vorrichtung nach einem der Ansprüche 1 bis 13, bei der die Module optische Elemente umfassen, die steg- oder matrizenförmig angeordnet sind.

**15.** Vorrichtung nach einem der Ansprüche 1 bis 14, bei der die Module optische Elemente des Typs Mikrolinse oder Mikrospiegel umfassen, die durch gemeinsame Fertigungsverfahren, wie sie in den Mikrotechnologien verwendet werden, hergestellt werden können.

**16.** Vorrichtung nach einem der Ansprüche 1 bis 15, bei der die Eingangs- oder Ausgangsablenkelemente Stege oder Matrizen aus einzeln elektrisch adressierbaren Spiegelelementen umfassen, die sich in parallelen Ebenen befinden, die eventuell in Bezug auf die allgemeine optische Achse im Mittel geneigt sind.

**17.** Vorrichtung nach einem der Ansprüche 1 bis 16, bei der das Verbindungsmodul (50) eine umgeklappte Konfiguration besitzt und optische Winkelkippelemente (58) und (59) umfasst, die ermöglichen, die möglicherweise abgelenkten verschiedenen Strahlenbündel von den Ausgängen des Eingangsablenkmoduls in einer Ebene senkrecht zur allgemeinen optischen Achse zusammenzubringen und dann an den verschiedenen Strahlenbündeln die umgekehrte Operation ausführen, um sie zu jedem der Eingänge des Ausgangsablenkmoduls zu richten.

**18.** Vorrichtung nach Anspruch 17, bei der das Verbindungsmodul wenigstens ein Fokussierungselement (55) des refraktiven Typs umfasst, das ermöglicht, in einer zur allgemeinen optischen Achse senkrechten Konfiguration zu arbeiten.

**19.** Vorrichtung nach Anspruch 17 oder Anspruch 18, bei der die Kippmittel (58) und (59) Stege oder Matrizen aus Linsen oder Spiegeln umfassen, wobei die Brennpunkte der verschiedenen Elemente, die die Kippmittel bilden, so berechnet sind, dass jede der verwendeten optischen Konjugationen die gleiche Vergrößerung aufweist.

20. Vorrichtung nach einem der Ansprüche 17 bis 19, bei der die Winkelkippelemente (58) und (59) Elemente zur Vergrößerung (56) und zur Verkleinerung (57) der Winkelabstände zwischen den verwendeten potentiellen abgelenkten Strahlenbündeln bilden.

21. Vorrichtung nach einem der Ansprüche 1 bis 20, die vor dem Eingangsablenkmodul eine Teilerkomponente (60) umfasst, die ermöglicht, die Lichtleistung jedes der Eingangswege in K gleiche oder ungleiche Teile zu unterteilen und eine Matrix aus $K \cdot N_E$ Lichtstrahlenbündeln (112) zu schaffen, wovon jedes zu irgendeinem der Ausgangswege, deren Anzahl $N_S$ wenigstens gleich $K \cdot N_E$ ist, orientiert werden kann.

22. Vorrichtung nach Anspruch 21, bei der die Teilerkomponente in integrierter Optik verwirklicht ist.

23. Vorrichtung nach Anspruch 21, bei der die Teilerkomponenten in Freiraumoptik verwirklicht sind und umfassen:

- einen ersten Steg (61) aus $N_E$ Kolümatormitteln, die ermöglichen, die von jedem der optischen Eingangswege (1) ausgegebenen $N_E$ Lichtstrahlenbündel in Richtung der Achse des Stegs parallel zu richten,
- einen zweiten Steg (62) aus $N_E$ reflexiven oder refraktiven Kollimatormitteln, die ermöglichen, die gebildeten $N_E$ Lichtzeilen parallel zu richten,
- eine Matrix (63) aus $K \cdot N_E$ refraktiven oder reflexiven optischen Elementen für die Formung, die ermöglichen, aus den $N_E$ Lichtzeilen $K \cdot N_E$ Lichtstrahlenbündel (112) mit optischen Eigenschaften, die an das Eingangsablenkmodul angepasst sind, zu erzeugen.

24. Vorrichtung nach einem der Ansprüche 1 bis 20, die vor dem Eingangsablenkmodul eine Demultiplexerkomponente (70) aufweist, die ermöglicht, L optische Variablen, die als Träger für transportierte Informationen verwendet werden können, zu trennen, wobei die Verbindung dieser Komponente mit jedem der optischen Wege eines Stegs aus $N_E$ Eingangslichtleitfasern ermöglicht, $L \cdot N_E$ Lichtstrahlenbündel (112) zu erzeugen, die in das Eingangsablenkmodul eingegeben werden, wobei die Anzahl $N_S$ wenigstens gleich $L \cdot N_E$ ist.

25. Vorrichtung nach Anspruch 24, bei der die Demultiplexerkomponente (70) in integrierter Optik verwirklicht ist.

26. Vorrichtung nach Anspruch 24 oder Anspruch 25, bei der die Komponente die Lichtwellenlänge □ trennen kann und in integrierter Optik verwirklicht ist.

27. Vorrichtung nach Anspruch 24 oder Anspruch 25, bei der die Komponente die Lichtwellenlänge □ trennen kann und in Freiraumoptik verwirklicht ist und umfasst:

- einen ersten Steg (71) aus $N_E$ Kollimatormitteln (Linsen oder Spiegel), die ermöglichen, die von jedem der optischen Eingangswege (1) ausgegebenen $N_E$ Lichtstrahlenbündel mit geeigneter Winkelöffnung parallel zu richten,
- einen Steg (72) aus Beugungsgittern, der Linien umfasst, die zur Achse des Stegs aus Eingangswegen (1) parallel orientiert sind, und ermöglicht, verschiedene Wellenlängen $□_1$, $□_2$, ..., $□_L$, die von jedem der $N_E$ optischen Eingangswege transportiert werden, räumlich zu trennen, wobei der Gittersteg in Bezug auf die zur optischen Achse des Systems senkrechten Ebenen um einen Winkel geneigt ist, der von der Winkelöffnung der auftreffenden Lichtstrahlenbündel und vom Abstand der Wellenlängen benachbarter Strahlenbündel, die von dem Gitter gebeugt werden, abhängt,
- einen Steg (74) aus optischen Mitteln, die ermöglichen, jedes der L Lichtstrahlenbündel mit Wellenlänge $□_1$, $□_2$, ..., $□_L$, die jedem der $N_E$ optischen Eingangswege zugeordnet sind und durch das Beugungsgitter erzeugt werden, in parallele Richtungen umzuorientieren,
- eine Matrix aus refraktiven oder reflexiven optischen Formungsmitteln, die in $N_E$ Spalten und L Zeilen angeordnet sind und ermöglichen, eventuell die optischen Eigenschaften der $L \cdot N_E$ Lichtstrahlenbündel (112), die mit dem Eingangsablenkmodul erhalten werden, anzupassen.

28. Vorrichtung nach einem der Ansprüche 1 bis 20, die vor dem Eingangsablenkmodul bzw. nach dem Ausgangsablenkmodul eine Demultiplexerkomponente (70) mit optischen Variablen am Eingang bzw. eine Multiplexerkomponente (80) mit den gleichen Variablen am Ausgang umfasst.

**29.** Vorrichtung nach Anspruch 28, **dadurch gekennzeichnet, dass** die betrachtete optische Variable die Wellenlänge □ ist und dass die verwendeten Demultiplexer (70) und Multiplexer (80) in integrierter Optik verwirklicht sind.

**30.** Vorrichtung nach Anspruch 28, **dadurch gekennzeichnet, dass** die betrachtete optische Variable die Wellenlänge □ ist und dass die verwendeten Demultiplexer (70) und Multiplexer (80) in Freiraumoptik verwirklicht sind.

**31.** Vorrichtung nach einem der Ansprüche 1 bis 20, die für die Demultiplexierung/Multiplexierung optischer Variablen geeignet ist, **gekennzeichnet durch** das Vorhandensein einer Demultiplexerkomponente für diese Variablen vor dem Eingangsablenkmodul und einer Multiplexerkomponente für diese Variablen nach dem Ausgangsablenkmodul und **durch** die Tatsache, dass:

- der Demultiplexer (70) ermöglicht, die L optischen Variablen $\square_1$, $\square_2$, ..., $\square_L$, die von jedem der $N_E$ Eingangswege transportiert werden, räumlich zu trennen und $L \cdot N_E$ parallele Lichtstrahlenbündel (112) zu erzeugen, die geeignete optische Eigenschaften besitzen und in Matrizen aus $N_E$ Spalten und L Zeilen angeordnet sind, wobei jede Zeile derselben optischen Variable $\square_i$ zugeordnet ist,
- der Demultiplexer ermöglicht, innerhalb jeder der L Zeilen jedes der $N_E$ Lichtstrahlenbündel, die derselben optischen Variable $\square_i$ zugeordnet sind, umzuorientieren und am Ausgang des Ausgangsablenkmoduls L Zeilen aus wenigstens $N_S = L \cdot N_E$ potentiellen Strahlenbündeln zu erzeugen,
- der Multiplexer (80) ermöglicht, diese L Zeilen in eine einzige Zeile zusammenzubringen und sie in irgendeinen der Ausgangswege einzuleiten, die in Stegen angeordnet sind und deren Anzahl $N_S$ wenigstens gleich $L \cdot N_E$ ist, wobei eine beliebige Anzahl von Kanälen, die den verschiedenen optischen Variablen $\square_i$ zugeordnet sind, zwischen 1 und L liegt.

**32.** Vorrichtung nach Anspruch 31, **dadurch gekennzeichnet, dass** die betrachtete optische Variable die Wellenlänge □ ist und dass die verwendeten Demultiplexer (70) und Multiplexer (80) in integrierter Optik verwirklicht sind.

**33.** Vorrichtung nach Anspruch 31, **dadurch gekennzeichnet, dass** die betrachtete optische Variable die Wellenlänge □ ist und dass die verwendeten Demultiplexer (70) und Multiplexer (80) in Freiraumoptik verwirklicht sind.

**34.** Vorrichtung nach einem der Ansprüche 1 bis 33, bei der die Betriebssteuerungselemente am Ausgang wenigstens eines Teils des Eingangsablenkmoduls oder des Ausgangsmoduls angeordnet sind, wobei diese Steuerungselemente Elemente zur räumlichen Trennung umfassen, die ermöglichen, einen Teil der Strahlenbündel abzugreifen.

**35.** Vorrichtung nach einem der Ansprüche 1 bis 34, **dadurch gekennzeichnet, dass** die bei den verschiedenen optischen Objekt/Bild-Konjugationen verwendeten Strahlenbündel Einschnürungen haben, deren Positionen sich auf Höhe der Elemente der verschiedenen Ablenkelemente befinden.

**36.** Vorrichtung nach einem der Ansprüche 1 bis 35, **dadurch gekennzeichnet, dass** die Kollimatorlinsen den Strahlenbündeln eine Einschnürung verleihen und dass das Formungsmodul für die Strahlenbündel eines Stegs oder einer Matrix aus Transportmikrolinsen vorgesehen ist und ermöglicht, die Position der Einschnürung zu verschieben.

**37.** Vorrichtung nach einem der Ansprüche 1 bis 36, **dadurch gekennzeichnet, dass** die Eingangs- und Ausgangswege Fasern sind.

**38.** Vorrichtung nach einem der Ansprüche 1 bis 37, **dadurch gekennzeichnet, dass** sie ein zusätzliches Konjugationselement oder eine Gesamtheit zusätzlicher Konjugationselemente umfasst, die zwischen dem Eingangsablenkmodul und dem Verbindungsmodul und/oder zwischen dem Ausgangsablenkmodul und dem Verbindungsmodul angeordnet sind.

**Claims**

**1.** An optical routing device for coupling each of a plurality $N_E$ of incoming optical channels (1) to any one of a plurality $N_S$ of outgoing optical channels (5) and for directing each of the optical beams entering via the incoming optical channels toward any of the $N_S$ outgoing optical channels, comprising:

- an input module (40) having $N_E$ optical inputs, that is designed to shape each of the beams entering via the incoming optical channels so as to obtain a plurality of shaped optical beams (112);

- an input deflection module (30) designed to generate, for each of the inputs, any position chosen from a number $P_{TN}$ of different angular deflection positions at least equal to the number $N_S$ of outgoing optical channels, this input deflection module (30) comprising $N_E$ lines each having a plurality of deflection elements arranged in cascade and each able to adopt a plurality of angular deflection configurations numbering less than the number $P_{TN}$;

- a linking module (50) designed to collate, in a one-to-one manner, the $P_{TN}$ angular deflection positions of each of the inputs with respect to $P_{TN}$ spatial focusing points respectively, this module being designed to generate $P_{TN}$ intermediate optical beams;

- an output deflection module (35) having $P_{TN}$ inputs that are designed to intercept the $P_{TN}$ intermediate optical beams and that is designed to generate, from the intermediate optical beams, $N_S$ output beams, this output deflection module (35) comprising $N_S$ lines each comprising a plurality of deflection elements in cascade and able to adopt a plurality of angular deflection configurations numbering less than the number $N_S$; and

- an optical output module (45) designed to shape each of the $N_S$ output beams so as to be able to apply them to the $N_S$ outgoing channels, and in which

  • in each line, each deflection element (DM) is coupled to the preceding one by an optical conjugation element (OCM) designed to carry out object-image conjugation between this deflection element and the preceding one,
  • each optical conjugation element has a magnification:

$$G_{i,i+1} = P_i \times (P_{i+1}-1)/(P_i-1)$$

where $P_i$ and $P_{i+1}$ represent the number of angular positions that can be adopted by the i and i+1 deflection elements between which this optical conjugation element is placed.

2. A device according to claim 1, **characterized in that** the incoming channels (1) and the outgoing channels (5) are parallel.

3. A device according to claim 1 or claim 2, **characterized in that** each conjugation element associated with two consecutive deflection elements comprises at least two lenses in a cofocal configuration, the ratio of the focal lengths of which is equal to the desired magnification between the two deflection elements.

4. A device according to any one of claims 1 to 3, **characterized in that** in at least one line, the optical deflection elements have the same number of angular positions and the magnification is equal to this number.

5. A device according to any one of claims 1 to 4, in which the deflection elements are mirrors that can swivel about at least one tilt axis.

6. A device according to claim 5, **characterized in that** the deflection elements are mirrors that can swivel in two angular positions about each tilt axis and the magnification $G_{i,i+1}$ is equal to 2.

7. A device according to any one of claims 1 to 6, in which the homologous angular deflection elements within the lines are distributed in a number of sets equal to the number of optical inputs.

8. A device according to claim 7, in which the sets have parallel optical axes.

9. A device according to any one of claims 1 to 8, in which the linking module (50) includes a refractive or reflective focusing element (55) for bringing together all the $P_{TN} \times N_E$ beams into $P_{TN}$ spatial focusing points in a single image focal plane (52).

10. A device according to claim 9, in which the $N_E$ outputs of the input deflection module (30) lie in the object focal plane (51) of the focusing element of the linking module (50) and the inputs of the output deflection module (35) lie in the image focal plane of this linking module.

11. A device according to any one of claims 1 to 10, in which the linking module (50) includes optical elements (56) for increasing and optical elements (57) for decreasing the angular separations between the $P_{TN}$ angular deflection positions respectively generated by each of the outputs of the input deflection module.

**12.** A device according to any one of claims 1 to 11, in which the linking module (50) includes a focusing lens and a deflection mirror (300), the image focal plane $F_{IM}$ of which is coincident with the image focal plane (52) of this focusing lens.

**13.** A device according to claim 12, having a folded configuration in which identical matrices of elements for the input and output deflection modules are used, one half of the elements of the matrices being involved in the case of the input deflection module and the other half, symmetrical with respect to the center of the various matrices, being involved in the case of the output deflection module.

**14.** A device according to any one of claims 1 to 13, in which the modules include optical elements arranged in linear arrays or in matrices.

**15.** A device according to any one of claims 1 to 14, in which the modules include optical elements of the microlens or micromirror type that can be produced by the collective fabrication processes involved in microtechnologies.

**16.** A device according to any one of claims 1 to 15, in which the input or output deflection elements include linear arrays or matrices of mirror elements that can be individually electrically addressed and that lie in parallel planes optionally inclined, on average, with respect to the general optical axis.

**17.** A device according to any one of claims 1 to 16, in which the linking module (50) has a folded configuration and includes optical angular-tilting elements (58) and (59) for bringing together the various potentially deflected beams from the outputs of the input deflection module in a plane perpendicular to the general optical axis and then carrying out the reverse operation on the various beams so as to direct them onto each of the inputs of the output deflection module.

**18.** A device according to claim 17, in which the linking module includes at least one refractive-type focusing element (55) for working in a configuration perpendicular to the general optical axis.

**19.** A device according to claim 17 or claim 18, in which the tilting means (58) and (59) comprise linear arrays or matrices of lenses or of mirrors, the focal length of the various elements forming the tilting means being calculated so that each of the optical conjugations involved has the same magnification.

**20.** A device according to any one of claims 17 to 19, in which the angular tilting elements (58) and (59) constitute elements (56) for increasing and elements (57) for decreasing the angular separations between the potential deflected beams involved.

**21.** A device according to any one of claims 1 to 20, comprising, in front of the input deflection module, a splitter component (60) for splitting the luminous power of each of the incoming channels into K equal or unequal parts and for making available a matrix of $K \times N_E$ light beams (112), each able to be directed toward any one of the outgoing channels, the number $N_S$ of which is at least equal to $K \times N_E$.

**22.** A device according to claim 21, in which the splitter component is produced in integrated optics.

**23.** A device according to claim 21, in which the splitter components are produced in free-space optics and comprise:

- a first linear array (61) of $N_E$ collimation means that makes it possible to collimate the $N_E$ light beams emanating from each of the incoming optical channels (1) along the direction of the axis of the linear array;
- a second linear array (62) of $N_E$ reflective or refractive collimation means for collimating the $N_E$ light rows formed; and
- a matrix (63) of $K \times N_E$ optical, refractive or reflective, shaping elements for generating, from the $N_E$ light rows, $K \times N_E$ light beams (112) having optical characteristics matched to the input deflection module.

**24.** A device according to any one of claims 1 to 20, comprising, in front of the input deflection module, a demultiplexer component (70) for splitting the L optical variables that can be used as transported data medium, the connection of this component with each of the optical channels of a linear array of $N_E$ incoming optical fibers 1 making it possible to generate $L \times N_E$ light beams (112) that are applied to the input deflection module, the number $N_S$ being at least equal to $L \times N_E$.

25. A device according to claim 24, in which the demultiplexer component (70) is produced in integrated optics.

26. A device according to claim 24 or claim 25, in which the component is designed to split the light wavelength $\lambda$ and is produced in integrated optics.

27. A device according to claim 24 or claim 25, in which the component is designed to split the light wavelength $\lambda$ and is produced in free-space optics and comprises:

- a first linear array (71) of $N_E$ collimation means (lenses or mirrors) for collimating the $N_E$ light beams emanating from each of the incoming optical channels (1) with the matched angular aperture;
- a linear array (72) of diffraction gratings composed of lines oriented parallel to the axis of the linear array of incoming channels (1) and making it possible for the various wavelengths $\lambda_1, \lambda_2, ... \lambda_L$ transported by each of the $N_E$ incoming optical channels to be split spatially, the linear array of gratings being inclined with respect to planes perpendicular to the optical axis of the system at an angle that depends on the angular aperture of the incident light beams and on the separation of the wavelengths of the adjacent beams diffracted by the grating;
- a linear array (74) of optical means for redirecting, along directions each parallel to the L light beams of wavelength $\lambda_1, \lambda_2, ... \lambda_L$ attached to each of the $N_E$ incoming optical channels and generated by the diffraction grating; and
- a matrix of optical, refractive or reflective, shaping means arranged in $N_E$ columns and L rows and making it possible to optionally match the optical characteristics of the $L \times N_E$ light beams (112) obtained to the input deflection module.

28. A device according to any one of claims 1 to 20, comprising, in front of the input deflection module and behind the output deflection module respectively, a demultiplexing component (70) for optical variables as input and a multiplexing component (80) for the same variables as output.

29. A device according to claim 28, **characterized in that** the optical variable in question is the wavelength $\lambda$ and **in that** the demultiplexers (70) and the multiplexers (80) used are produced in integrated optics.

30. A device according to claim 28, **characterized in that** the optical variable in question is the wavelength $\lambda$ and **in that** the demultiplexers (70) and the multiplexers (80) used are produced in free-space optics.

31. A device according to any one of claims 1 to 20, designed for the demultiplexing/multiplexing of optical variables, **characterized by** the presence of a component for demultiplexing these variables that is placed in front of the input deflection module and of a component for multiplexing these variables that is placed behind the output deflection module, and **characterized in that**:

- the demultiplexer (70) makes it possible to spatially split L optical variables $v_1, v_2 ... v_L$ transported by each of the $N_E$ incoming channels and to generate $L \times N_E$ parallel light beams (112) having matched optical characteristics and arranged in matrices of $N_E$ columns and L rows, each row being attached to the same optical variable $v_1$;
- makes it possible to redirect, within each of the L rows, each of the $N_E$ light beams attached to the same optical variable $v_1$ and to generate, as output from the output deflection module, L rows of at least $N_S = L \times N_E$ potential beams; and
- the multiplexer (80) brings together these L rows into a single row and reinjects, into any of the outgoing channels arranged in linear arrays, and the number $N_S$ of which is at least equal to $L \times N_E$, any number of channels attached to the various optical variables $v_l$ that lies between l and L.

32. A device according to claim 31, **characterized in that** the optical variable in question is the wavelength $\lambda$ and **in that** the demultiplexers (70) and the multiplexers (80) used are produced in integrated optics.

33. A device according to claim 31, **characterized in that** the optical variable in question is the wavelength $\lambda$ and **in that** the demultiplexers (70) and the multiplexers (80) used are produced in free-space optics.

34. A device according to any one of claims 1 to 33, in which operating control elements are placed on the output side of at least part of the input deflection module or of the output module, these control elements comprising spatial splitting elements for taking off some of the beams.

35. A device according to any one of claims 1 to 34, **characterized in that** the beams involved during the various object-image optical conjugation operations have waists whose positions are located at the elements of the various deflection elements.

36. A device according to any one of claims 1 to 35, **characterized in that** the collimation lenses give the beams a waist and **in that** a module for shaping the beams from a linear array or from a matrix of transport microlenses is provided that allows the position of the waists to be shifted.

37. A device according to any one of claims 1 to 36, **characterized in that** the incoming and outgoing channels are fibers.

38. A device according to any one of claims 1 to 37, **characterized in that** it includes an additional conjugation element or set of conjugation elements that is placed between the input deflection module and the linking module and/or between the output deflection module and the linking module.

FIG.1

FIG.2

FIG.3a

FIG.3b

FIG.3c

FIG.3d

FIG.4a

FIG.4b

FIG.5

FIG.6a

FIG.6b

FIG.6c

FIG.6d

FIG.6e

FIG.6f

FIG.7

FIG.8

FIG.9

FIG.10

FIG.11

FIG.12

FIG.13a

FIG.13b

FIG.14a

FIG.14b

FIG14c

FIG.14d

## FIG15

## FIG.16

Eléments
d'entrée

Eléments de
sortie

FIG.17